(19) **Europäisches Patentamt / European Patent Office / Office européen des brevets**

(11) **EP 2 292 912 B1**

(12) **EUROPEAN PATENT SPECIFICATION**

(45) Date of publication and mention
of the grant of the patent:
**23.10.2019 Bulletin 2019/43**

(51) Int Cl.:
*F02D 21/08* (2006.01)       *F02D 35/00* (2006.01)
*F02D 41/00* (2006.01)       *F02D 41/18* (2006.01)

(21) Application number: **10189425.1**

(22) Date of filing: **15.03.2004**

(54) **Fuel injection amount control apparatus for internal combustion engine with exhaust gas recirculation**

Vorrichtung zur Steuerung der Einspritzmenge für eine Brennkraftmaschine mit Abgasrückführung

Dispositif de commande d'injection pour moteur à combustion interne avec recyclage de gaz d'échappement

(84) Designated Contracting States:
**AT BE BG CH CY CZ DE DK EE ES FI FR GB GR HU IE IT LI LU MC NL PL PT RO SE SI SK TR**

(30) Priority: **17.03.2003 JP 2003071986**

(43) Date of publication of application:
**09.03.2011 Bulletin 2011/10**

(62) Document number(s) of the earlier application(s) in accordance with Art. 76 EPC:
**04006139.2 / 1 460 251**

(73) Proprietor: **TOYOTA JIDOSHA KABUSHIKI KAISHA**
**Toyota-shi, Aichi-ken, 471-8571 (JP)**

(72) Inventors:
• **Negishi, Akiyoshi**
**Toyota-shi, Aichi 471-8571 (JP)**
• **Kibe, Kazuya**
**Toyota-shi, Aichi 471-8571 (JP)**

(74) Representative: **TBK**
**Bavariaring 4-6**
**80336 München (DE)**

(56) References cited:
**EP-A2- 1 026 385       EP-A2- 1 164 274**
**US-A- 4 423 713**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The invention relates to a fuel injection amount control apparatus and method for an internal combustion engine, which performs exhaust gas recirculation, and limits a fuel injection amount required for the internal combustion engine based on a smoke limit fuel injection amount that is set according to an intake air amount for suppressing generation of smoke.

2. Description of the Related Art

In an exhaust gas recirculation internal combustion engine, miss ignition may occur, which may cause deterioration of fuel economy and generation of smoke in the case where an amount of recirculated exhaust gas (hereinafter, referred to as "exhaust gas recirculation amount") is large when a fuel injection amount is increased at the time of acceleration. In order to solve such problems, a technology is known, in which the exhaust gas recirculation amount is reduced at the time of acceleration (for example, refer to Japanese Patent No. 2599953 (page 4, FIG. 3)).

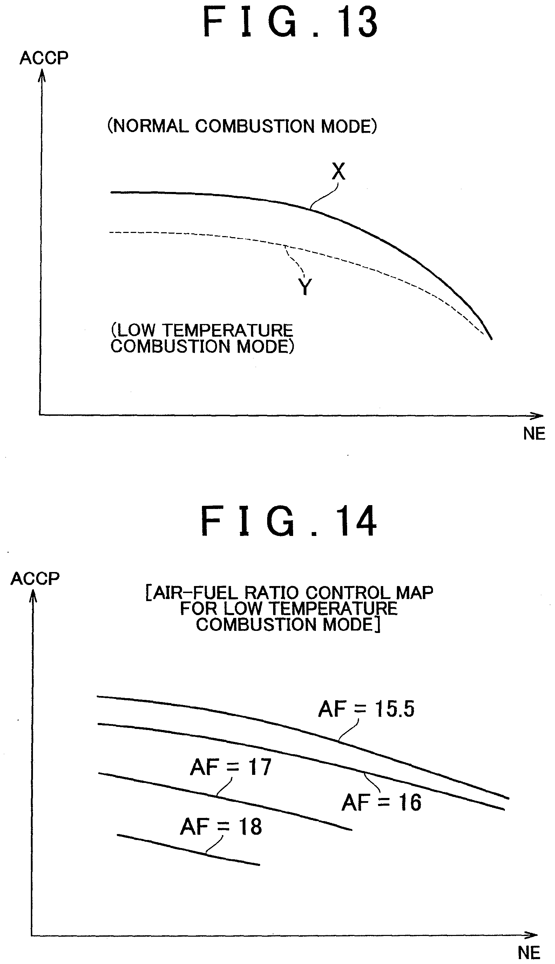

Also, in order to realize a low temperature combustion mode in which both of generation of smoke and an amount of NOx are sufficiently reduced, a technology is known, in which an exhaust gas recirculation amount is large as compared with a normal exhaust gas recirculation (For example, refer to Japanese Patent Laid-Open Publication No. 2000-8835 (page 8 to 9, FIG. 14)).

With regard to a fuel injection amount in the control shown in the aforementioned Japanese Patent No.2599953, a smoke limit fuel injection amount according to the intake air amount is generally provided in order to suppress generation of smoke in exhaust gas. Thus, a control of a fuel injection amount is performed such that the fuel injection amount does not become larger than the smoke limit fuel injection amount.

When the rate of exhaust gas recirculation amount (hereinafter, referred to as "exhaust gas recirculation rate") increases due to the exhaust gas recirculation control, the rate of the amount of intake air supplied to a combustion chamber decreases. Therefore, the smoke limit fuel injection amount decreases. Accordingly, in the case where the exhaust gas recirculation is performed, the fuel injection amount is likely to be limited by the smoke limit fuel injection amount, and the required acceleration performance may not be sufficiently obtained even when an attempt is made to abruptly increase the fuel injection amount at the time of acceleration. Particularly when acceleration is performed after idling or deceleration, the acceleration performance significantly decreases since the intake air amount is small. In order to solve this, the exhaust gas recirculation amount needs to be reduced, as disclosed in the aforementioned Japanese Patent No. 2599953. However, if the exhaust gas recirculation amount is reduced, the effect of reducing the amount of NOx, which is an advantage of the exhaust gas recirculation, decreases.

Particularly, in a system in which an exhaust gas recirculation amount is large as compared with a normal exhaust gas recirculation, as disclosed in Japanese Patent Laid-Open Publication No. 2000-8835, since the rate of the exhaust gas recirculation amount is significantly large as compared with the rate of the intake air amount, it becomes even more difficult to satisfy the request for abruptly increasing the fuel injection amount at the time of acceleration, which may make it difficult to sufficiently perform acceleration. EP 1 164 274 A2 discloses a fuel injection amount control apparatus having the features of the preamble of claim 1.

SUMMARY OF THE INVENTION

It is an object of the invention to improve acceleration performance and to suppress generation of smoke without decreasing an exhaust gas recirculation amount, by increasing a smoke limit fuel injection amount using a factor other than an intake air amount in the case where exhaust gas recirculation is performed.

The object is achieved by fuel injection amount control apparatus having the features of independent claim 1.

According to the invention, a fuel injection amount control apparatus for an internal combustion engine is provided, which performs exhaust gas recirculation, and limits a fuel injection amount required for the internal combustion engine based on a smoke limit fuel injection amount that is set according to an intake air amount for suppressing generation of smoke. The fuel injection amount control apparatus includes limiting means for calculating an EGR smoke limit fuel injection amount which is permitted considering both an intake air amount and an exhaust gas recirculation amount, based on an operating state of the internal combustion engine, and limiting the fuel injection amount required for the internal combustion engine based on the larger value of the EGR smoke limit fuel injection amount and the smoke limit fuel injection amount.

The EGR smoke limit fuel injection amount which is permitted considering both the intake air amount and the exhaust gas recirculation amount is calculated based on the operating state of the internal combustion engine. That is, the calculated EGR smoke limit fuel injection amount is equivalent to a value obtained by summing the smoke limit fuel injection amount based on the intake air amount and the smoke limit fuel injection amount based on the exhaust gas recirculation amount. Thus, the fuel injection amount is limited based on the larger value of the smoke limit fuel injection amount and the EGR smoke limit fuel injection amount.

Accordingly, since the limiting means limits the fuel injection amount in the aforementioned manner, the acceleration performance can be improved without decreasing the exhaust gas recirculation amount while suppressing generation of smoke during the exhaust gas recirculation.

The limiting means calculates an EGR base smoke limit fuel injection amount according to an operating state of the internal combustion engine, and obtains the EGR smoke limit fuel injection amount based on the EGR base smoke limit fuel injection amount and an exhaust gas recirculation rate.

The EGR smoke limit fuel injection amount varies according to the operating state of the internal combustion engine. Accordingly, first, the limiting means calculates the EGR base smoke limit fuel injection amount according to the operating state of the internal combustion engine so that the EGR smoke limit fuel injection amount is corresponded to the changing of the operating state of the internal combustion engine. Further, the limiting means obtains the EGR smoke limit fuel injection amount, based on the EGR base smoke limit fuel injection amount and the exhaust gas recirculation rate, so that the EGR smoke limit fuel injection amount is corresponded to the exhaust gas recirculation rate.

The fuel injection amount is limited by the larger value of the EGR smoke limit fuel injection amount thus obtained and the smoke limit fuel injection amount, whereby the acceleration performance can be improved without decreasing the exhaust gas recirculation amount while suppressing generation of smoke.

The limiting means calculates an EGR base smoke limit fuel injection amount according to a rotational speed of the internal combustion engine, and obtains the EGR smoke limit fuel injection amount, based on the EGR base smoke limit fuel injection amount, an exhaust gas recirculation rate, an atmospheric pressure and a temperature factor.

Examples of the operating state of the internal combustion engine include the rotational speed of the internal combustion engine. The oxygen amount in the amount of the recirculated exhaust gas taken into the combustion engine of the internal combustion engine is influenced by the atmospheric pressure and the temperature factor in addition to the rotational speed of the internal combustion engine and the exhaust gas recirculation rate. Accordingly, the limiting means calculates the EGR base smoke limit fuel injection amount according to the rotational speed of the internal combustion engine, and obtains the EGR smoke limit fuel injection amount based on the exhaust gas recirculation rate, the atmospheric pressure, and the temperature factor together with the EGR base smoke limit fuel injection amount. Thus, the EGR smoke limit fuel injection amount can be set more appropriately. As a result, the acceleration performance can be improved and generation of smoke can be suppressed without decreasing the exhaust gas recirculation amount.

The temperature factor may be at least one of the intake air temperature and the coolant temperature of the internal combustion engine.

Particularly, examples of the temperature factor which influences the oxygen amount in the exhaust gas recirculation amount include the intake air temperature and the coolant temperature of the internal combustion engine. Since at least one of the intake air temperature and the coolant temperature of the internal combustion engine is used as the temperature factor for obtaining the EGR smoke limit fuel injection amount, the EGR smoke limit fuel injection amount can be set more appropriately. As a result, the acceleration performance can be improved, and generation of smoke can be suppressed without decreasing the exhaust gas recirculation amount.

The fuel injection amount control apparatus may further include first feedback means for setting a target intake air amount based on the operating state of the internal combustion engine, and adjusting the exhaust gas recirculation amount such that an actual intake air amount matches the target intake air amount.

Thus, when the first feedback means feeds back the intake air amount, the intake air amount is limited by introducing the recirculated exhaust gas. Therefore, by setting the smoke limit fuel injection amount considering the oxygen in the recirculated exhaust gas, it is possible to permit a more rapid increase in the fuel injection amount than in the conventional case at the time of acceleration, and to improve the acceleration performance without decreasing the exhaust gas recirculation amount while suppressing generation of smoke.

The fuel injection amount control apparatus may further include second feedback means for setting a target air-fuel ratio based on the operating state of the internal combustion engine, and adjusting the exhaust gas recirculation amount such that an actual exhaust gas air-fuel ratio matches the target air-fuel ratio.

When the second feedback means feeds back the exhaust gas recirculation amount, the intake air amount is limited by introducing the recirculated exhaust gas. Therefore, since the smoke limit fuel injection amount is set considering the oxygen in the recirculated exhaust gas, it is possible to permit a more rapid increase in the fuel injection amount than in the conventional case at the time of acceleration, and to improve the acceleration performance without decreasing the exhaust gas recirculation amount while suppressing generation of smoke.

In the fuel injection amount control apparatus, the exhaust gas recirculation may be performed in a low temperature combustion mode in which generation of smoke is suppressed by making the exhaust gas recirculation amount extremely large.

As described above, since the extremely large amount of exhaust gas is recirculated in the low temperature combustion mode, the intake air amount is reduced and the smoke limit fuel injection amount decreases accordingly. However, the smoke limit fuel injection amount can be actually increased according to the exhaust gas recirculation amount by considering the residual oxygen amount in the exhaust gas recirculation amount.

Accordingly, in the internal combustion engine in which the low temperature combustion mode is performed, it is possible to obtain a remarkable effect of improving the acceleration performance without decreasing the exhaust gas recirculation amount while suppressing generation of smoke.

In the fuel injection amount control apparatus, the exhaust gas recirculation internal combustion engine may be an exhaust gas recirculation diesel engine.

More specifically, examples of the exhaust gas recirculation internal combustion engine include the exhaust gas recirculation diesel engine. In such a diesel engine, the acceleration performance can be improved without decreasing the exhaust gas recirculation amount while suppressing generation of smoke.

BRIEF DESCRIPTION OF THE DRAWINGS

The foregoing and further objects, features and advantages of the invention will become apparent from the following description of preferred embodiments and not claimed comparative examples useful for understanding the invention with reference to the accompanying drawings, wherein like numerals are used to represent like elements, only the third embodiment constitutes an embodiment of the invention, first, second, fourth, and fifth embodiments constitute not claimed comparative examples, and wherein:

FIG. 1 is a schematic diagram showing a configuration of an exhaust gas recirculation diesel engine and a control system thereof in a first embodiment;
FIG. 2 is a flowchart of a fuel injection amount control process, which is performed by an ECU of the aforementioned control system;
FIG. 3 is a flowchart of a final smoke limit fuel injection amount QAFMfin calculation process, which is performed by the ECU;
FIG. 4 is a graph describing a configuration of a smoke limit fuel injection amount map MapQAFM, which is used by the ECU for performing the process;
FIG. 5 is a graph describing a configuration of an EGR smoke limit basic correction value map MapQAFMegrbs, which is used by the ECU;
FIG. 6 is a graph describing a configuration of an EGR rate correction coefficient map MapEGR, which is used by the ECU;
FIG. 7 is a graph describing a configuration of an atmospheric pressure correction coefficient map MapPa, which is used by the ECU;
FIG. 8 is a graph describing a configuration of an intake air temperature correction coefficient map MapTHA, which is used by the ECU;
FIG. 9 is a graph describing a configuration of a coolant temperature correction coefficient map MapTHW, which is used by the ECU;
FIG. 10 is a graph showing a setting state of the final smoke limit fuel injection amount QAFMfin in the first embodiment;
FIG. 11 is a timing chart describing an effect obtained in the first embodiment;
FIG. 12 is a flowchart of a combustion mode setting process which is performed by the ECU in a second embodiment;
FIG. 13 is a graph showing border determining values X, Y, which are used by the ECU for determining the combustion mode;
FIG. 14 is a graph describing an air-fuel ratio control map in the low temperature combustion mode;
FIG. 15 is a graph describing an air-fuel ratio control map in a normal combustion mode;
FIG. 16 is a flowchart of the final smoke limit fuel injection amount QAFMfin calculation process, which is performed by the ECU in the second embodiment;
FIG. 17 is a flowchart of a fuel injection amount control process, which is performed by the ECU;
FIG. 18 is a graph showing a setting state of the final smoke limit fuel injection amount QAFMfin in the second embodiment;
FIG. 19 is a flowchart showing part of the final smoke limit fuel injection amount QAFMfin calculation process, which is performed by the ECU in a third embodiment of the invention;
FIG. 20 is a graph describing a configuration of a basic EGR smoke limit value map MapQAFMminbs, which is used in the third embodiment of the invention;
FIG. 21 is a graph describing a configuration of an EGR rate correction coefficient map MapminEGR, which is used by the ECU;

FIG. 22 is a graph showing a setting state of the final smoke limit fuel injection amount QAFMfin in the third embodiment of the invention;

FIG. 23 is a flowchart of the final smoke limit fuel injection amount QAFMfin calculation process, which is performed by the ECU in a fourth embodiment;

FIG. 24 is a timing chart describing an effect obtained in the fourth embodiment; and

FIG. 25 is a flowchart of the final smoke limit fuel injection amount QAFMfin calculation process, which is performed by the ECU in a fifth embodiment.

## DETAILED DESCRIPTION OF THE PREFERRED EMBODIMENTS

[First embodiment]

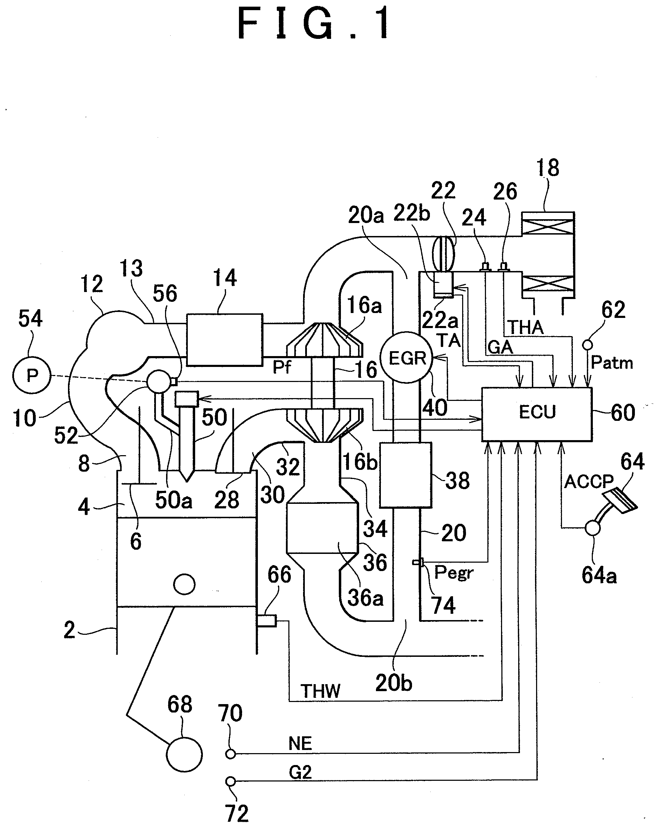

FIG. 1 is a schematic diagram showing an exhaust gas recirculation diesel engine and a control system thereof in a first embodiment. A diesel engine 2 includes plural cylinders, more specifically four cylinders or six cylinders. Each combustion chamber 4 is connected to a surge tank 12 through an intake port 8 which is opened/closed by an intake valve 6, and an intake manifold 10. The surge tank 12 is connected to an intercooler 14 and a turbocharger through an intake passage 13. In this case, the surge tank 12 is connected to an outlet side of a compressor 16a of an exhaust turbocharger 16. An inlet side of a compressor 16a is connected to an air cleaner 18. In an intake passage 13 between the compressor 16a and the air cleaner 18, an EGR gas supply port 20a of an exhaust gas recirculation (hereinafter, referred to as "EGR") passage 20 is opened, and a throttle valve 22, an intake air amount sensor 24, and an intake air temperature sensor 26 are provided from the downstream side.

Each combustion chamber 4 is connected to an inlet side of an exhaust turbine 16b of the exhaust turbo charger 16 through an exhaust port 30 which is opened/closed by an exhaust valve 28, and an exhaust manifold 32. An outlet side of the exhaust turbine 16b is connected to a catalytic converter 36 through an exhaust passage 34. The catalytic converter 36 includes a catalyst 36a which has an oxidization function. An EGR gas intake port 20b of the EGR passage 20 is opened on a downstream side of the catalytic converter 36. An intercooler 38 for cooling EGR gas and an EGR valve 40 are provided at certain points in the EGR passage 20 from the EGR gas intake port 20b side. The amount of the EGR gas supplied from the EGR gas supply port 20a to the intake passage 13 is adjusted by controlling an opening amount of the EGR valve.

A fuel injection valve 50 is provided in each cylinder and directly injects fuel into each combustion chamber 4. The fuel injection valve 50 is connected to a common rail 52 through a fuel supply pipe 50a. Fuel is supplied to the common rail 52 from a fuel pump 54 which is electrically controlled and whose discharge amount is variable. Highly pressurized gas supplied to the common rail 52 from the fuel pump 54 is distributed and supplied to each fuel injection valve 52 through each fuel supply pipe 50a. A fuel pressure sensor 56 for detecting the pressure of the fuel in the common rail 52 is fitted to the common rail 52.

An electronic control unit (hereinafter, referred to as "ECU") 60 includes, as a main body, a digital computer, and a drive circuit for driving each device. The digital computer includes a CPU, ROM, RAM, and the like. The ECU reads a signal concerning an intake air amount GA from the aforementioned intake air amount sensor 24, a signal concerning an intake air temperature THA from an intake air temperature sensor 26, and a signal concerning a fuel pressure Pf from a fuel pressure sensor 56. Further, the ECU 60 reads a signal concerning an opening amount TA of a throttle valve 22 from a throttle opening amount sensor 22a, a signal concerning an atmospheric pressure Patm from an atmospheric pressure sensor 62, and a signal concerning an accelerator opening amount ACCP from an accelerator opening amount sensor 64a for detecting a depression amount of an accelerator pedal 64. Further, the ECU 60 reads a signal concerning a coolant temperature THW from a coolant temperature sensor 66 for detecting a coolant temperature of the diesel engine 2, a pulse signal concerning an engine speed NE from an engine speed sensor 70 for detecting a rotational speed of a crank shaft 68. Also, the ECU 60 reads a cylinder determining signal G2 from a cylinder determining sensor 72 which detects a rotational phase of the crank shaft 68 or a rotational phase of an intake cam so as to make a cylinder determination. Also, the ECU 60 reads a signal concerning an EGR gas pressure Pegr from an EGR pressure sensor 74 which is provided on the upstream side of the EGR valve 40 in the EGR passage 20.

The ECU 60 controls timing or an amount of fuel injection performed by a fuel injection valve 50 based on an engine operating state which is obtained from these signals. Further, the ECU 60 performs an opening control of the EGR valve 40 and a throttle opening control by a motor 22b. In this case, for example, an EGR control is performed. In the EGR control, the throttle opening amount TA and the EGR opening amount (the opening amount of the EGR valve 40) are adjusted such that an EGR rate (a weight percent of the EGR gas in gas taken in the combustion chamber 4) becomes equal to a target EGR rate which is set based on an engine load and the engine speed NE. Further, an intake air amount feedback control (which can be regarded as the first feedback means) is performed. In the intake air amount feedback control, the EGR opening amount is adjusted such that the intake air amount becomes equal to a target intake air amount (a target value per one revolution of the engine 2) which is set based on the engine load and the engine speed NE.

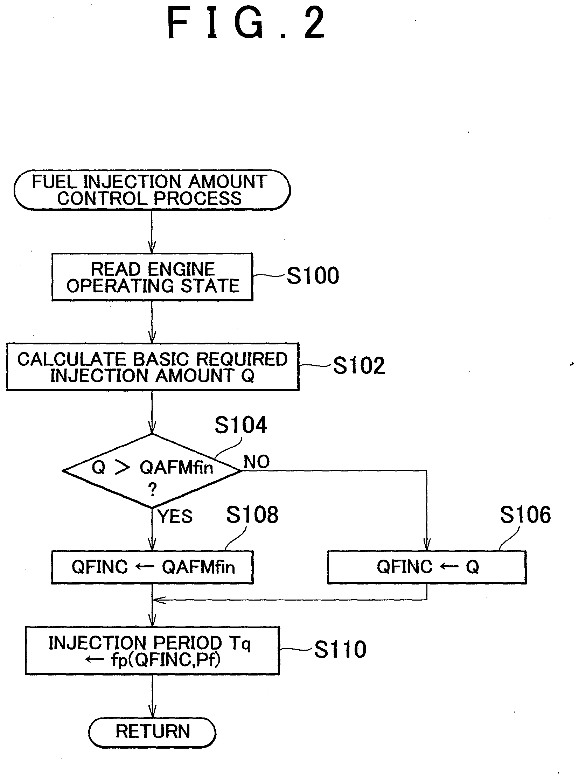

Next, a process of the fuel injection amount control (hereinafter, referred to as "fuel injection amount control process") performed by the ECU 60 will be described. FIG. 2 shows a flowchart of the fuel injection amount control process. The process is performed as an interrupt every time the crank angle becomes a given crank angle (180 degrees CA in a four-cylinder engine, and 120 degrees in a six-cylinder engine). "CA" signifies the crank angle.

After the process is started, first, the aforementioned sensors reads the operating state of the diesel engine 2 (S100). A basic required injection amount Q is calculated based on the engine operating state which is read in step S100 (S102). During idling time, the basic required injection amount Q is calculated so as to be increased or decreased such that a target idling rotational speed is achieved. Thus, the basic required injection amount Q is calculated considering that idling is performed. At times other than idling time, the basic required injection amount Q is calculated considering the engine speed NE and the like so as to output torque corresponding to the instruction by a driver, which is indicated by an accelerator opening amount ACCP detected by the accelerator opening amount sensor 64a.

Next, it is determined whether the basic required injection amount Q is larger than the final smoke limit fuel injection amount QAFMfin (S104). The final smoke limit fuel injection amount QAFMfin is a smoke limit fuel injection amount that is obtained in a process of calculating the final smoke limit fuel injection amount QAFMfin (hereinafter, referred to as "final smoke limit fuel injection amount QAFMfin calculation process"), which will be described later. When the fuel injection amount exceeds the final smoke limit fuel injection amount QAFMfin, the combustion is brought into a state in which smoke is generated in the exhaust gas. That is, the final smoke limit fuel injection amount QAFMfin is an upper limit value of the fuel injection amounts at which smoke is not generated.

If the basic required injection amount Q is equal to or smaller than the final smoke limit fuel injection amount QAFMfin (i.e., NO in step S104), a final fuel injection amount QFINC is set to the value of the basic required injection amount Q which is obtained in step S102 (S106).

If the basic required injection amount Q is larger than the final smoke limit fuel injection amount QAFMfin (i.e., YES in step S104), the final fuel injection amount QFINC is set to the value of the final smoke limit fuel injection amount QAFMfin (S108).

After the value of the final fuel injection amount QFINC is set in either step S106 or step S108, an injection period Tq for the fuel injection valve 50 of a cylinder into which the fuel is injected this time is calculated based on the final fuel injection amount QFINC and the fuel pressure Pf (S110).

Then, the process is finished. Thus, the fuel injection valve 50 of the cylinder into which the fuel is injected this time is opened during a period equivalent to the injection period Tq, and the fuel of an amount equivalent to the final fuel injection amount QFINC is injected into the cylinder. Since the final fuel injection amount QFINC is limited by the final smoke limit fuel injection amount QAFMfin, generation of the smoke in the exhaust gas is suppressed.

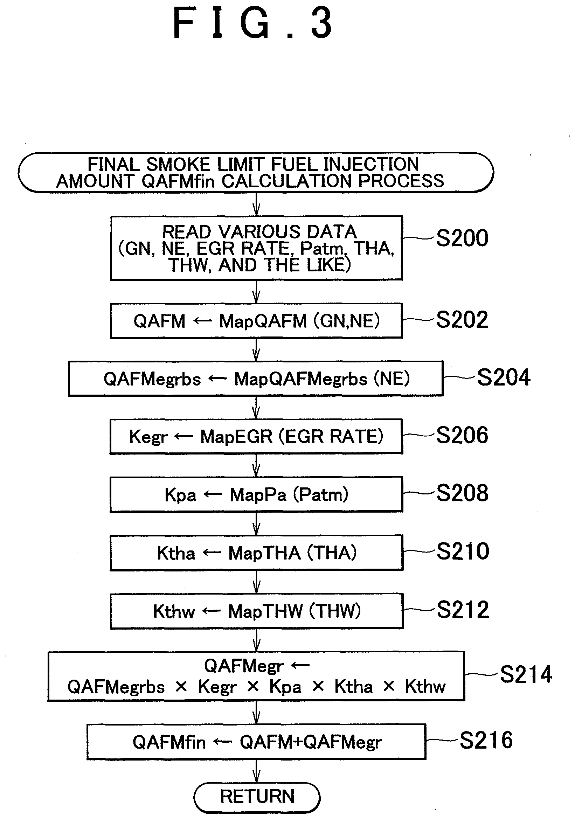

FIG. 3 is a flowchart of the final smoke limit fuel injection amount QAFMfin calculation process. The process is performed as an interrupt immediately before the aforementioned fuel injection amount control process (FIG. 2) at the same cycle as that of the fuel injection amount control process (FIG. 2).

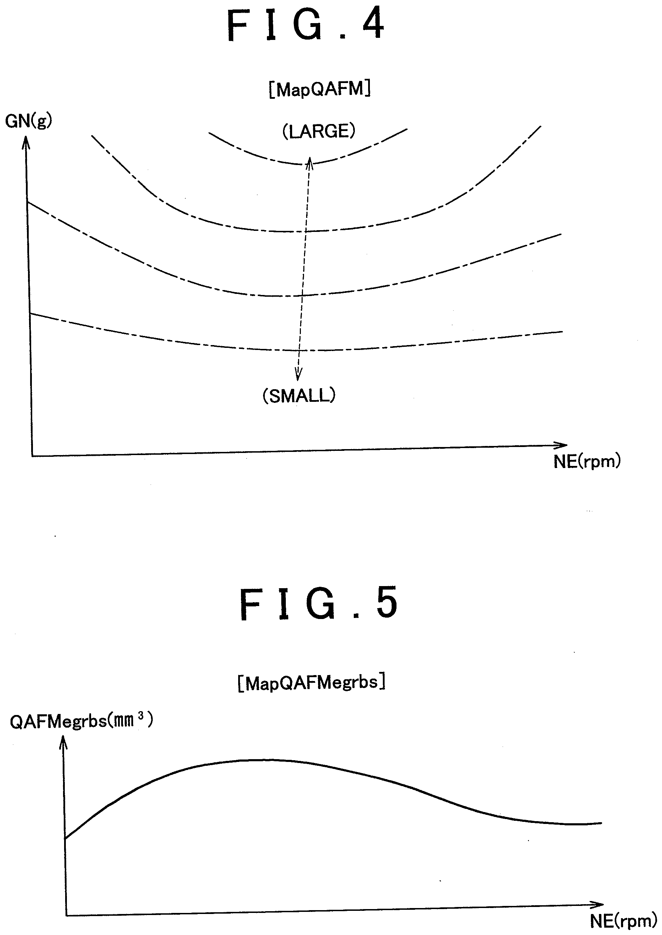

After the process is started, detection results from the various sensors and various data which are calculated based on the detection results (an intake air amount GN, the engine speed NE, the EGR rate, the atmospheric pressure Patm, the intake air temperature THA, the coolant temperature THW, and the like) are read in a working area of the RAM (S200). Next, the smoke limit fuel injection amount map QAFM is calculated based on the intake air amount GN per one revolution of the engine and the engine speed NE among the various data according to a smoke limit fuel injection amount map MapQAFM (S202). The smoke limit fuel injection amount QAFM is an upper limit value of the fuel injection amounts at which smoke is not generated in the exhaust gas even when combustion is performed in the gas taken in the combustion chamber 4. A map of the smoke limit fuel injection amount QAFM is made in advance through experiments using the intake air amount GN (= GA / NE) and the engine speed NE as parameters, and is stored in the ROM of the ECU 60, as shown in FIG. 4. In the map shown in FIG. 4, the tendency of the value is shown by a dashed contour. Note that the map shown in FIG. 4 is exemplary, and the map varies according to type of the engine.

Next, an EGR smoke limit basic correction value QAFMegrbs is calculated according to an EGR smoke limit basic correction value map MapQAFMegrbs (S204). This EGR smoke limit basic correction value map MapQAFMegrbs is made by obtaining, through experiments, an increase amount by which the smoke limit fuel injection amount QAFM is increased due to the oxygen in the EGR gas under the condition that the EGR rate is 100 %, the atmospheric pressure Patm is 1013 hPa (i.e., 1 atmospheric pressure), the intake air temperature THA is 20 °C, and the coolant temperature THW is 80 °C. FIG. 5 shows this map.

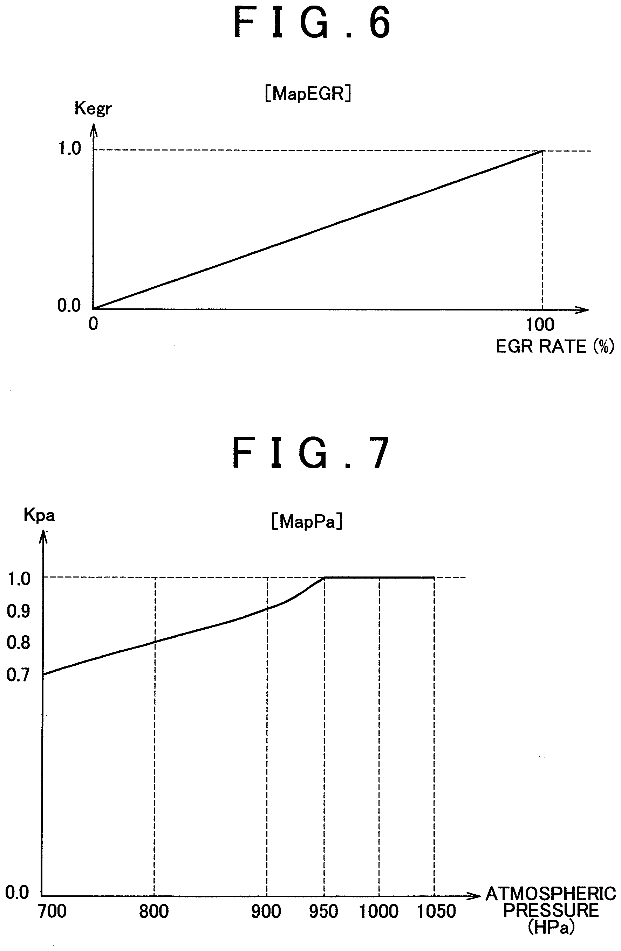

Next, an EGR rate correction coefficient Kegr is calculated based on the EGR rate according to an EGR rate correction coefficient map MapEGR shown in FIG. 6 (S206). This EGR rate correction coefficient map MapEGR may be obtained through experiments. However, instead of using the map, the EGR rate may be used as it is. A target EGR rate obtained based on the engine load (in this case, the fuel injection amount) and the engine speed NE may be used as the EGR rate. Alternatively, the EGR rate may be obtained according to an EGR rate map which is made in advance through experiments based on the EGR gas pressure Pegr, the engine speed NE, and the controlled variable of the opening amount of the EGR valve 40. Further, instead of obtaining the EGR rate according to such a map, the EGR rate may be obtained as follows. An EGR gas amount is obtained using a gas flow amount sensor for measuring the EGR gas flow amount in the EGR passage 20, and the EGR rate is obtained using the obtained EGR amount and the intake air amount GA according to an equation, EGR rate = EGR amount / (EGR amount + GA).

Next, an atmospheric pressure correction coefficient Kpa is calculated based on the atmospheric pressure Patm according to an atmospheric pressure correction coefficient map MapPa shown in Fig. 7 (S208). The atmospheric correction coefficient map MapPa may be obtained through experiments so as to be used in order to calculate the atmospheric pressure correction coefficient Kpa. However, instead of using the map, a ratio between the atmospheric pressure Patm and 1 atmospheric pressure may be calculated so as to be used in order to calculate the atmospheric pressure correction coefficient Kpa.

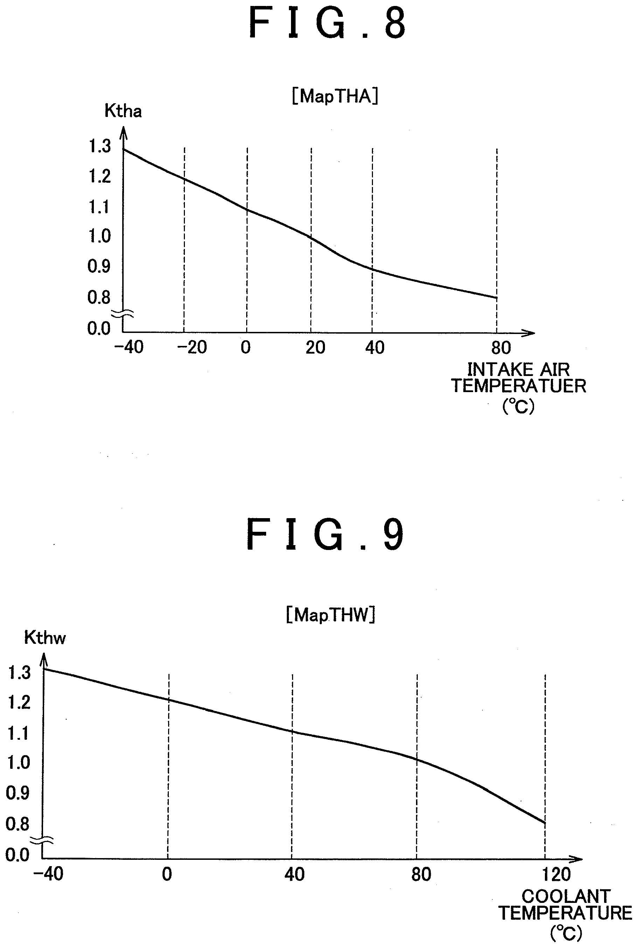

Next, an intake air temperature correction coefficient Ktha is calculated based on the intake air temperature THA according to an intake air temperature correction coefficient map MapTHA shown in FIG. 8 (S210). The intake air temperature correction coefficient map MapTHA may be obtained through experiments so as to be used. However, instead of using the map, a ratio between an intake air density at the intake air temperature THA and an intake air density at a reference temperature (in this case, 20 °C) may be used.

Next, a coolant temperature correction coefficient Kthw is calculated based on the coolant temperature THW according to a coolant temperature correction coefficient map MapTHW shown in FIG. 9 (S212). The coolant temperature correction coefficient map MapTHW may be obtained through experiments so as to be used. However, instead of using the map, a ratio between a gas density in the combustion chamber 4 at the coolant temperature THW and the gas density in the combustion chamber 4 at the reference temperature (in this case, 80°C) may be used.

After each of the correction coefficients Kegr, Kpa, Ktha, Kthw is calculated, an EGR smoke limit correction value QAFMegr is calculated using the following equation (1) (S214).

$$\text{QAFMegr} \leftarrow \text{QAFMegrbs} \times \text{Kegr} \times \text{Kpa} \times \text{Ktha} \times \text{Kthw} \ \dots \ (1)$$

The EGR smoke limit correction value QAFMegr shows an increase amount by which the smoke limit fuel injection amount QAFM is increased due to introduction of the EGR gas in the present operating state of the diesel engine 2.

Accordingly, the final smoke limit fuel injection amount QAFMfin is calculated by increasing the smoke limit fuel injection amount QAFM by the EGR smoke limit correction value QAFMegr using the following equation (2).

$$\text{QAFMfin} \leftarrow \text{QAFM} + \text{QAFMegr} \ \dots \ (2)$$

Then, the process is finished.

Thus, the increase correction is performed according to the EGR gas at each control cycle so as to calculate the final smoke limit fuel injection amount QAFMfin. Then, the final smoke limit fuel injection amount QAFMfin is used for a determination in step S104 and an upper limit value setting process in step S108 in the aforementioned fuel injection amount control process (FIG. 2).

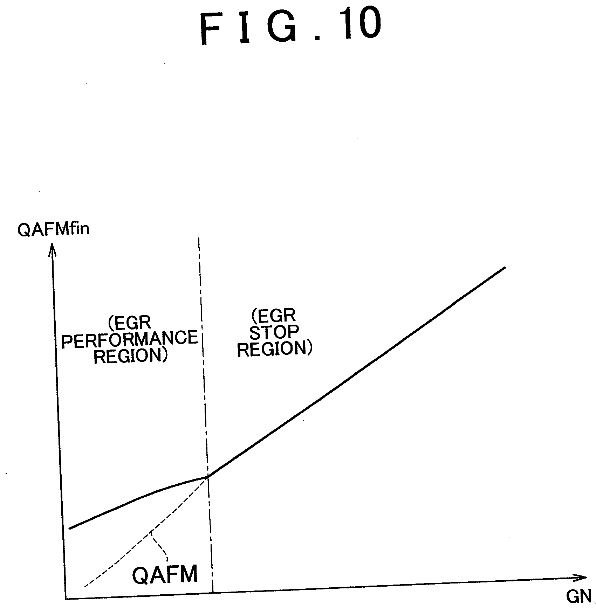

As shown in FIG. 10, in the conventional case, the value of the smoke limit fuel injection amount QAFM is used in a region in which EGR is performed (hereinafter, referred to as "EGR performance region"), as shown by a dotted line. In the embodiment, since the final smoke limit fuel injection amount QAFMfin is used in the EGR performance region as shown by a solid line, the limit of the fuel injection amounts at which smoke is not generated becomes larger. Therefore, a larger amount of fuel can be injected.

In the aforementioned first embodiment, it can be considered that the final smoke limit fuel injection amount QAFMfin calculation process (FIG. 3) is equivalent to the process by the increasing means. Also, it can be considered that the EGR smoke limit basic correction value QAFMegrbs is equivalent to the basic correction amount concerning the exhaust gas recirculation amount. Further, it can be considered that the EGR smoke limit correction value QAFMegr is equivalent to the correction amount used for the increase correction of the smoke limit fuel injection amount.

According to the first embodiment that has been described, the following effects can be obtained.

(I) The smoke limit fuel injection amount QAFM is set based on the oxygen amount in the intake air. However, the EGR gas also contains the residual oxygen. Accordingly, in the case where the smoke limit fuel injection amount QAFM is set based on only the intake air amount GN, generation of smoke can be prevented even when the fuel injection amount is larger than the smoke limit fuel injection amount QAFM by a certain increase amount, as long as the EGR is being performed. That is, since the EGR gas contains oxygen, the actual smoke limit fuel injection amount is larger than the smoke limit fuel injection amount QAFM that is set based on the intake air amount. Therefore, the fuel injection amount can be further increased without generating smoke while maintaining the EGR gas amount.

Accordingly, in the final smoke limit fuel injection amount QAFMfin calculation process (FIG. 3), the EGR smoke limit correction value QAFMegr, which is used for increasing the smoke limit fuel injection amount QAFM, is calculated considering the oxygen amount in the EGR gas in step S204 to S214. The final smoke limit fuel injection amount QAFMfin is set by increasing the smoke limit fuel injection amount QAFM by the EGR smoke limit correction value QAFMegr (S216). Thus, when there is a request for acceleration, a large amount of fuel can be injected as compared to when the smoke limit fuel injection amount QAFM is used.

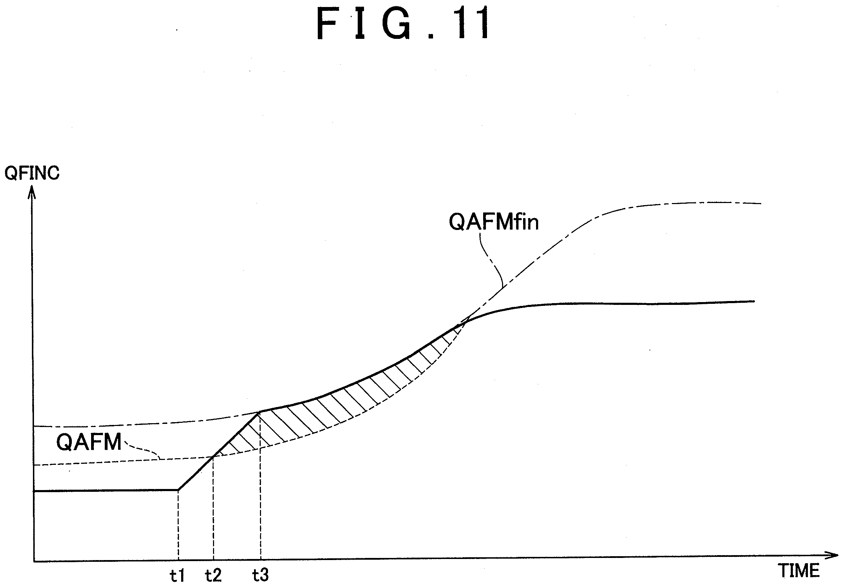

Hereinafter, description will be made of a case where an acceleration operation is performed at time t1 as shown by a solid line in a timing chart in FIG. 11, as an example. In a case where the fuel injection amount is limited by the final smoke limit fuel injection amount QAFMfin (shown by a dashed line) which is obtained by performing the increase correction, the final fuel injection amount QFINC can be increased until t3, as compared with a case where the fuel injection amount is limited by the smoke limit fuel injection amount QAFM (shown by a dotted line) at time t2. Therefore, the fuel injection amount can be increased without generating smoke, and higher acceleration performance can be obtained, as compared with the case where the fuel injection amount shown by hatching is limited by the smoke limit fuel injection amount QAFM (shown by the dotted line). Particularly when acceleration is performed after idling or deceleration, a remarkable effect can be obtained since the intake air amount is small.

Thus, the acceleration performance can be improved without decreasing the EGR gas amount while suppressing generations of smoke.

(II) Since the EGR gas amount varies according to the engine speed NE, it is possible to provide the appropriate reference value for the increase correction by calculating the EGR smoke limit basic correction value QAFMegrbs according to the engine speed NE.

Further, the EGR rate, the atmospheric pressure Patm, and the intake air temperature THA and the coolant temperature THW as the temperature factors influence the oxygen amount in the EGR gas taken in the combustion chamber 4. Accordingly, the correction coefficients Kegr, Kpa, Ktha, Kthw are obtained based on the data concerning the EGR rate, the atmospheric pressure Patm, the intake air temperature THA, and the coolant temperature THW. Then, the EGR smoke limit correction value QAFMegr is calculated by correcting the EGR smoke limit basic correction value QAFMegrbs using the correction coefficients Kegr, Kpa, Ktha, Kthw. Thus, the increase correction of the smoke limit fuel injection amount QAFM can be performed more appropriately. As a result, the acceleration performance can be improved and generation of smoke can be suppressed without decreasing the EGR gas.

[Second embodiment]

In a diesel engine control system according to a second embodiment, two combustion modes due to the EGR control, that is, a normal combustion mode and a low temperature combustion mode, are performed. Particularly when performing the low temperature combustion mode in which the EGR rate is extremely high, the increase correction of the smoke limit fuel injection amount QAFM is performed as in the first embodiment, whereby a rapid increase in the fuel injection amount is prevented from being limited at the time of acceleration.

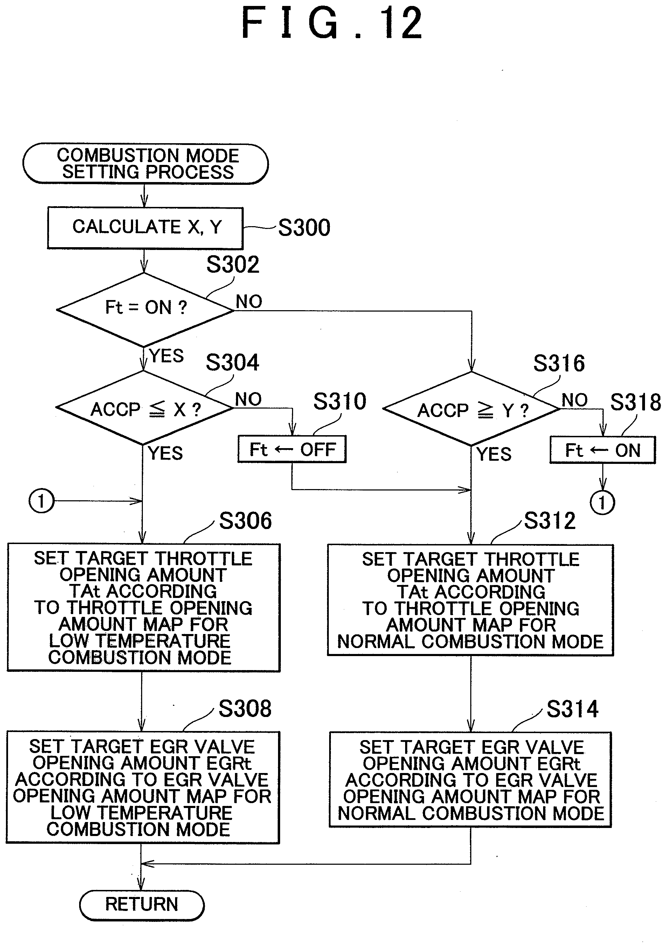

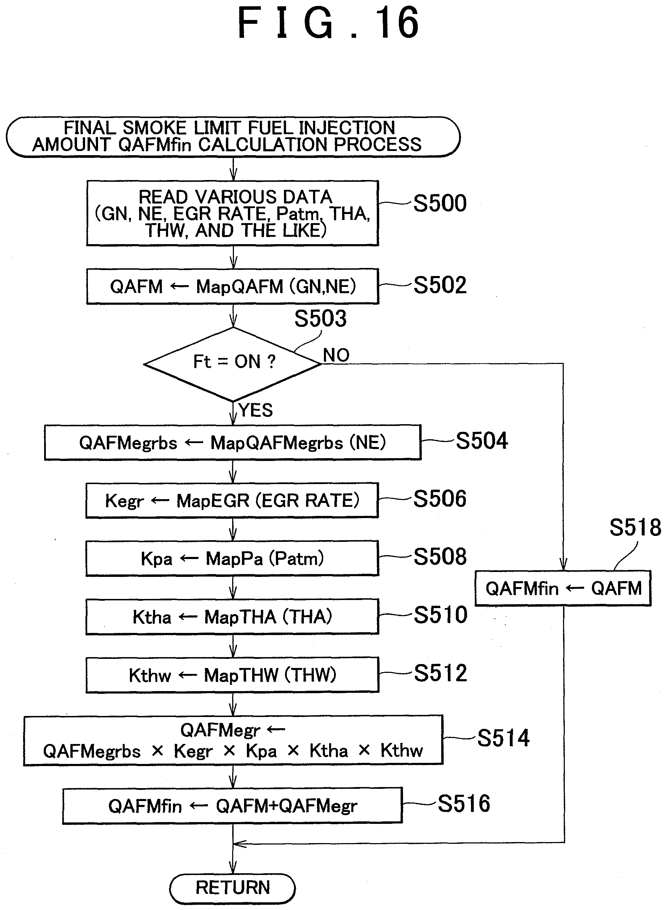

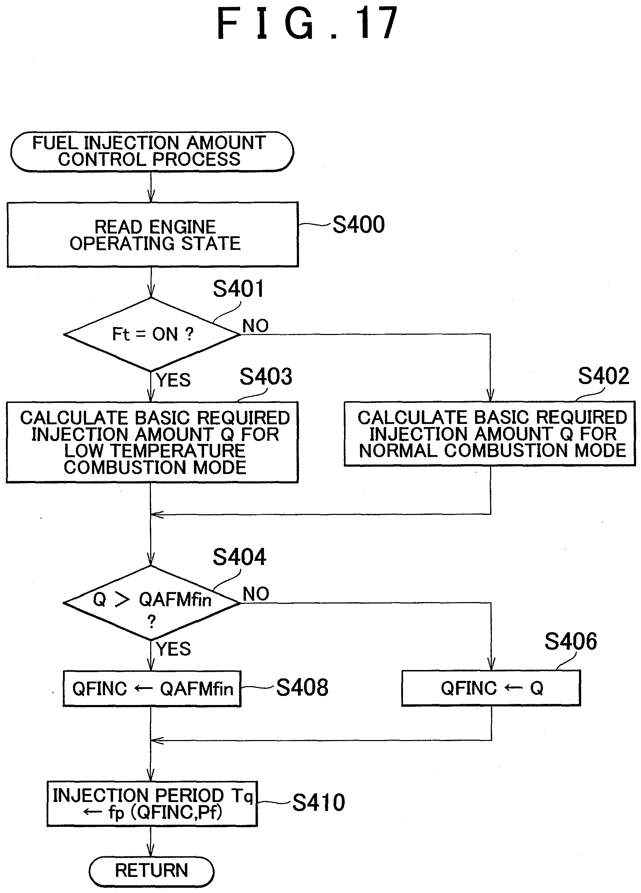

Therefore, a fuel injection mode setting process shown in FIG. 12 is performed. Instead of performing the final smoke limit fuel injection amount QAFMfin calculation process (FIG. 3) in the first embodiment, a final smoke limit fuel injection amount QAFMfin calculation process shown in FIG. 16 is performed. Also, instead of performing the fuel injection amount limit control process (FIG. 2), a fuel injection amount control process shown in FIG. 17 is performed. An air-fuel ratio sensor, which detects an air-fuel ratio AF based on components of exhaust gas, is provided in the exhaust gas system of the engine. A signal indicative of the air-fuel ratio AF is input to the ECU. Except for these, the configuration of the diesel engine control system according to the second embodiment is substantially the same as that of the diesel engine control system according to the first embodiment.

The combustion mode setting process (FIG. 12) will be described. The process is performed immediately before the final smoke limit fuel injection amount QAFMfin calculation process (FIG. 16) and the fuel injection amount control process (FIG. 17) at the same cycle as that of the processes in FIG. 16 and FIG. 17.

When the combustion mode setting process (FIG. 12) is performed, a first border determining value X and a second border determining value Y, which are used for determining the combustion mode, are calculated based on a required engine load (in this case, an accelerator opening amount ACCP) (S300). As shown in FIG. 13, these border determining values X, Y are set in a two-dimensional space using the engine speed NE and the required engine load (ACCP). The first border determining value X shown by the solid line is used for determining whether the combustion mode needs to be changed from the low temperature combustion mode to the normal combustion mode. The second border determining value Y shown by the dotted line is used for determining whether the combustion mode needs to be changed from the normal combustion mode to the low temperature combustion mode. Each of the border determining values X, Y is set in the ROM of the ECU in the form of a map or a computing equation in which the engine speed NE is used as a parameter.

Next, it is determined whether a low temperature combustion mode performance flag Ft is ON (S302). If the flag Ft is ON (i.e., YES in step S302), it is determined that the low temperature combustion mode is performed. Therefore, it is determined whether the required engine load (ACCP) is equal to or smaller than the first border determining value X (S304).

If the required engine load (ACCP) is equal to or smaller than the first border determining value X (i.e., YES in step S304), a process for performing the low temperature combustion mode is performed. That is, a target throttle opening amount TAt is set according to a throttle opening amount map for the low temperature combustion mode (S306), and a target EGR valve opening amount EGRt is set according to an EGR valve opening amount map for the low temperature combustion mode (S308). In the throttle opening amount map for the low temperature combustion mode and the EGR valve opening amount map for the low temperature combustion mode, the target throttle opening amount TAt and the target EGR valve opening amount EGRt are set such that the EGR rate becomes approximately 70 %, which is an extremely high EGR rate. Thus, as shown in FIG. 14, the air-fuel ratio in the combustion chamber becomes slightly leaner than the stoichiometric air-fuel ratio.

By setting the EGR rate to an extremely high value in this manner, the low temperature combustion mode is achieved, in which the combustion temperature is decreased so as to suppress generation of both smoke and NOx. The target throttle opening amount TAt is achieved by controlling a motor for driving the throttle valve through feedback based on the throttle opening amount TA detected by the throttle opening amount sensor. Also, the feedback correction of the EGR valve opening amount is performed such that the EGR valve opening amount matches the target EGR valve opening amount EGRt, and accordingly the air-fuel ratio shown in FIG. 14 is achieved. Thus, an appropriate EGR valve opening amount is achieved.

As long as the required engine load (ACCP) is equal to or smaller than the first border determining value X (i.e., YES in step S304), the process in step S306 and step S308 is continued, whereby the low temperature combustion is continued and the low temperature combustion mode performance flag Ft is maintained in the ON state.

If the required engine load (ACCP) becomes larger than the first border determining value X (i.e., NO in step S304) while the aforementioned low temperature combustion mode is continued, the low temperature combustion mode performance flag Ft is turned OFF (S310). Accordingly, the combustion mode is changed from the low temperature combustion mode to the normal combustion mode. Subsequently, the process for performing the normal combustion is performed.

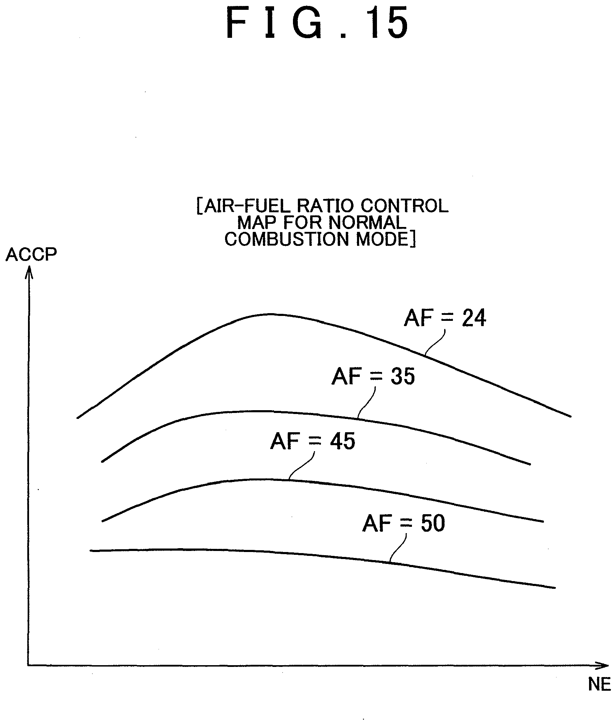

That is, the target throttle opening amount TAt is set according to the throttle opening amount map for the normal combustion mode (S312), and the target EGR valve opening amount EGRt is set according to the EGR valve opening amount map for the normal combustion mode (S314). In the throttle opening amount map for the normal combustion mode and the EGR valve opening amount map for the normal combustion mode, the target throttle opening amount TAt and the target EGR valve opening amount EGRt are set such that the EGR rate becomes equal to or smaller than 40 %, which is a relatively small EGR rate. Thus, the air-fuel ratio in the combustion chamber becomes by far leaner than the stoichiometric air-fuel ratio, as shown in FIG. 15.

By setting the EGR rate in this manner, generation of smoke can be suppressed particularly when the fuel injection amount is large. The target throttle opening amount TAt is achieved in the same manner as in the case of the low temperature combustion mode. Also, the feedback correction of the EGR valve opening amount is performed such that the EGR valve opening amount matches the target EGR valve opening amount EGRt, and accordingly the air-fuel ratio shown in FIG. 15 is achieved. Thus, an appropriate EGR valve opening amount is achieved.

Since the low temperature combustion mode performance flag Ft is OFF in the next control cycle (i.e., NO in step S302), it is determined whether the required engine load (ACCP) is equal to or larger than the second border determining value Y (S316).

Since the required engine load (ACCP) is equal to or larger than the second border determining value Y (i.e., YES in step S316) in this case, the process for performing the normal combustion in the aforementioned steps S312 and S314 is continued. Then, as long as the required engine load is equal to or larger than the second border determining value Y (i.e., YES in step S316), the process in the steps S312 and S314 is continued, whereby the normal combustion is continued and the low temperature combustion mode performance flag Ft is maintained in the OFF state.

If the required engine load becomes smaller than the second border determining value Y (i.e., No in step S316) while the aforementioned normal combustion mode is continued, the low temperature combustion mode performance flag Ft is turned ON (S318). Accordingly, the combustion mode is changed from the normal combustion mode to the low temperature combustion mode. Then, the aforementioned process for performing the low temperature combustion in steps S306 and S308 is performed. Thus, the combustion mode is set and is performed.

The final smoke limit fuel injection amount QAFMfin calculation process (FIG. 16) will be described. In the process, steps S500, S502, and S504 to S516 are the same as steps S200 to S216 in FIG. 3 in the first embodiment.

Unlike the process shown in FIG. 3, after the smoke limit fuel injection amount QAFM is calculated (S502), it is determined whether the low temperature combustion mode performance flag Ft is ON (S503). If the flag Ft is ON (i.e., YES in step S503), the same process as in steps S204 to S216 in FIG. 3 is performed (S504 to S516). Thus, the final smoke limit fuel injection amount QAFMfin is calculated by performing the increase correction of the smoke limit fuel injection amount QAFM using the EGR smoke limit correction value QAFMegr. If the flag Ft is OFF (i.e., NO in step S503), the final smoke limit fuel injection amount QAFMfin is set to the smoke limit fuel injection amount QAFM (S518).

That is, if the flag Ft is ON, the EGR smoke limit correction value QAFMegr is reflected in the final smoke limit fuel injection amount QAFMfin. However, if the flag Ft is OFF, the EGR smoke limit correction value QAFMegr is not reflected in the final smoke limit fuel injection amount QAFMfin. Accordingly, since a higher rate of the EGR gas is introduced in the combustion chamber in the low temperature combustion mode, the EGR smoke limit correction value QAFMegr becomes large, and the smoke limit fuel injection amount QAFM is greatly increased using the large EGR smoke limit correction value QAFMegr so as to obtain the final smoke limit fuel injection amount QAFMfin. However, since the rate of the EGR gas is relatively small in the normal combustion mode, the smoke limit fuel injection amount QAFM is used without being corrected as the final smoke limit fuel injection amount QAFMfin.

The fuel injection amount control process (in FIG. 17) will be described. In the process, step S400, and steps S404 to S410 are the same as step S100, and steps S104 to S110 in FIG. 2.

Unlike the process shown in FIG. 2, after the engine operating state is read (S400), it is determined whether the low temperature combustion mode performance flag Ft is ON (S401). If the flag Ft is ON (i.e., YES in step S401), the basic required injection amount Q for the low temperature combustion mode is calculated. If the flag Ft is OFF (i.e., NO in step S401), the basic required injection amount Q for the normal combustion mode is calculated (S402). The basic required injection amount Q for the low temperature combustion mode is set based on the accelerator opening amount ACCP considering pumping loss, acceleration performance, and the like in the low temperature combustion mode. The basic required injection amount Q for the normal combustion mode is set based on the accelerator opening amount ACCP considering pumping loss, acceleration performance, and the like in the normal combustion mode.

After the basic required injection amount Q is set in step S402 or step S403, the final fuel injection amount QFINC is set using the present final smoke limit fuel injection amount QAFMfin as the upper limit in the same manner as in the aforementioned steps S104 to S110 in FIG. 2 (S404 to S408). The injection period Tq corresponding to the final fuel injection amount QFINC is calculated (S410), and then the fuel is injected.

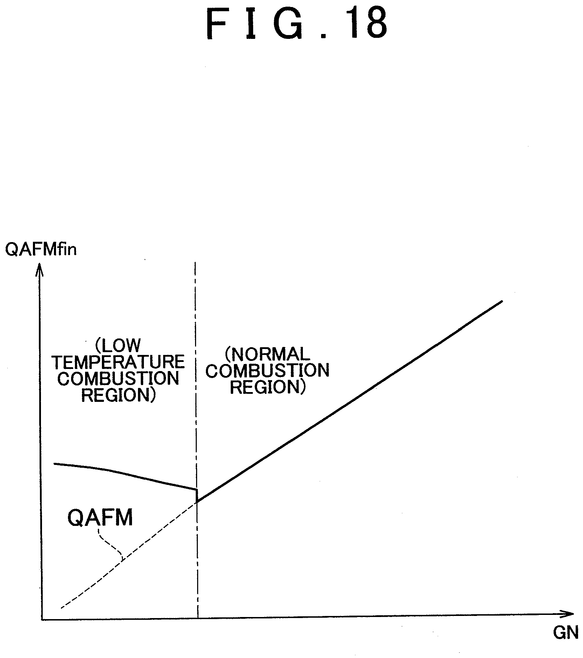

As shown in FIG. 18, in the conventional case, the value of the smoke limit fuel injection amount QAFM shown by a dotted line is used particularly in the low temperature combustion region in the EGR performance region. However, in the embodiment, the final smoke limit fuel injection amount QAFMfin shown by a solid line is used. Therefore, the limit of the fuel injection amounts at which smoke is not generated becomes much larger. Thus, a larger amount of fuel can be injected.

In the aforementioned second embodiment, it can be considered that the final smoke limit fuel injection amount QAFMfin calculation process (FIG. 16) is equivalent to the process by the increasing means. Also, it can be considered that the feedback correction control, which is performed for the EGR valve opening amount such that the EGR valve opening amount matches the target EGR valve opening amount EGRt, and accordingly the air-fuel ratio shown in FIG. 14 and FIG. 15 is achieved, is equivalent to the second feedback means.

According to the second embodiment that has been described, the following effects can be obtained.

(I) The same effects as the effects described in (I) and (II) in the first embodiment can be obtained.
(II) The increase correction of the smoke limit fuel injection amount QAFM is performed in the low temperature combustion mode, and the exhaust gas recirculation amount is extremely large in the low temperature combustion mode. Therefore, the intake air amount is reduced, and the smoke limit fuel injection amount QAFM decreases.

However, since the final smoke limit fuel injection amount QAFMfin is obtained by increasing the smoke limit fuel injection amount QAFM by the EGR smoke limit correction value QAFMegr that is determined considering the residual oxygen amount in the EGR gas, the final smoke limit fuel injection amount QAFMfin is greatly increased according to the EGR gas amount.

Accordingly, in the diesel engine in which the low temperature combustion mode is performed, it is possible to obtain a remarkable effect of improving the acceleration performance without decreasing the EGR gas amount while suppressing generation of smoke.

[Third embodiment]

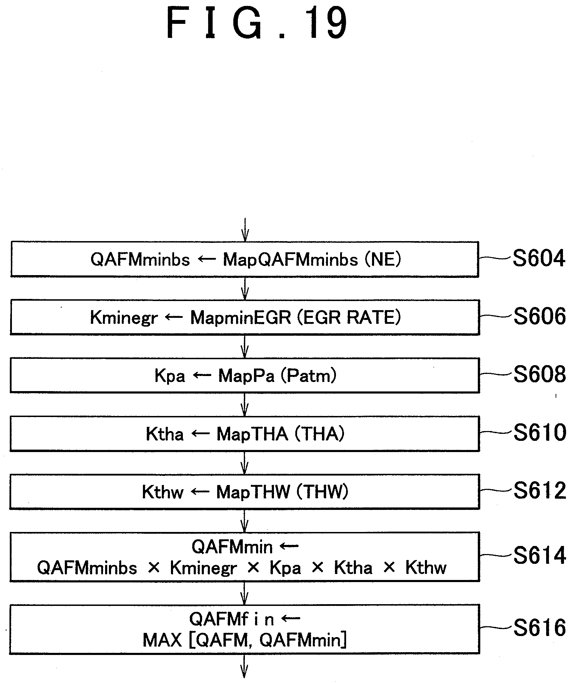

A diesel engine control system according to a third embodiment of the invention is different from the diesel engine control system according to the first embodiment or the second embodiment in the method of calculating the final smoke limit fuel injection amount QAFMfin. Except for this calculation method, the diesel engine control system according to the third embodiment of the invention is the same as the diesel engine control system according to the first embodiment or the second embodiment n. FIG. 19 shows part of the final smoke limit fuel injection amount QAFMfin calculation process. When this process is applied to the first embodiment, this process is performed instead of the process in steps S204 to S216 in FIG. 3. When this process is applied to the second embodiment, this process is performed instead of the process in steps S504 to S516 in FIG. 16. Other configurations are the same as those in the first embodiment or the second embodiment.

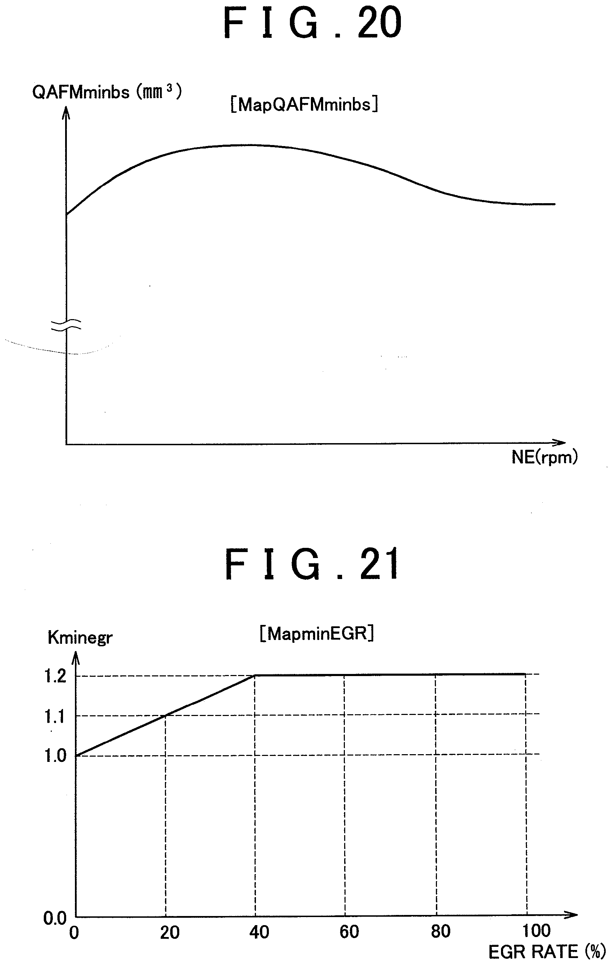

The process shown in FIG. 19 will be described. First, a basic EGR smoke limit value QAFMminbs is calculated based on the engine speed NE according to a basic EGR smoke limit value map MapQAFMminbs (S604). The basic EGR smoke limit value QAFMminbs is the smoke limit fuel injection amount, which is obtained through experiments based on the oxygen in the intake air amount GN per one revolution of the engine under the condition that the EGR rate is 0 %, the atmospheric pressure Patm is 1013 hPa the intake air temperature THA is 20 °C, and the coolant temperature THW is 80 °C. Then, a map of the basic EGR smoke limit value QAFMminbs is made as shown in FIG. 20.

Next, an EGR rate correction coefficient Kminegr is calculated based on the EGR rate according to an EGR rate correction coefficient map MapminEGR shown in FIG. 21 (S606). This EGR rate correction coefficient Kminegr is a correction coefficient for obtaining a total oxygen amount in the intake air and the EGR gas when the EGR gas is added to the intake air. The EGR rate correction coefficient map MapminEGR is obtained through experiments.

Next, the atmospheric pressure correction coefficient Kpa is calculated based on the atmospheric pressure Patm according to the atmospheric pressure correction coefficient map MapPa shown in FIG. 7 in the first embodiment (S608). Then, the intake air temperature correction coefficient Ktha is calculated based on the intake air temperature THA according to the intake air temperature correction coefficient map MapTHA shown in FIG. 8 in the first embodiment (S610). Then, the coolant temperature correction coefficient Kthw is calculated based on the coolant temperature THW according to the coolant temperature correction coefficient map MapTHW shown in FIG. 9 in the first embodiment (S612). The methods of calculating the correction coefficients without using the maps in steps S608 to S612 are the same as in steps S208 to S212 in the first embodiment.

After each of the correction coefficients Kminegr, Kpa, Ktha, Kthw is calculated, the EGR smoke limit value QAFMmin is calculated using the following equation (3).

$$QAFMmin \leftarrow QAFMminbs \times Kminegr \times Kpa \times Ktha \times Kthw \dots (3)$$

This EGR smoke limit value QAFMmin is equivalent to the entire amount of the smoke limit fuel injection amount when the EGR gas is introduced in the present operating state of the diesel engine 2. Accordingly, as shown in the following equation (4), the final smoke limit fuel injection amount QAFMfin is set to the larger value of the smoke limit fuel injection amount QAFM and the EGR smoke limit value QAFMmin (S616).

$$QAFMfin \leftarrow MAX [QAFM, QAFMmin] \dots (4)$$

MAX [ ] indicates an operator which extracts the largest value among the values in the brackets.

The final smoke limit fuel injection amount QAFMfin that is thus calculated is used in the determination in step S104 or S404 and the upper limit value setting process in step S108 or S408 in the aforementioned fuel injection amount control process (FIG. 2 or FIG. 17).

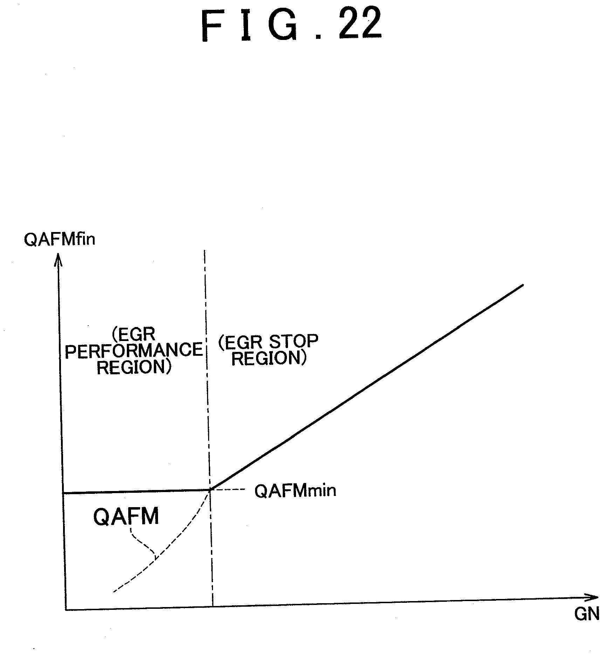

Accordingly, as shown in FIG. 22 (in the case where the final smoke limit fuel injection amount QAFMfin calculation process is applied to the first embodiment), when the smoke limit fuel injection amount QAFM (shown by a dotted line) is smaller than the EGR smoke limit value QAFMmin (shown by a dashed line) in the EGR performance region, the final smoke limit fuel injection amount QAFMfin is set to the EGR smoke limit value QAFMmin. Thus, since the final smoke limit fuel injection amount QAFMfin shown by a solid line is used in the EGR performance region, the limit of the fuel injection amounts at which smoke is not generated becomes larger. Therefore, a larger amount of fuel can be injected.

In the aforementioned third embodiment of the invention, it can be considered that the final smoke limit fuel injection amount QAFMfin calculation process in FIG. 19 for obtaining the final smoke limit fuel injection amount QAFMfin (which is applied to the process shown in FIG. 3 or FIG. 16) is equivalent to the process by the limiting means. Also, it can be considered that the basic EGR smoke limit value map MapQAFMminbs is equivalent to the EGR base smoke limit fuel injection amount, and the EGR smoke limit value QAFMmin is equivalent to the EGR smoke limit fuel injection amount.

According to the third embodiment of the invention that has been described, the following effects can be obtained.

(I) In the third embodiment of the invention, the EGR smoke limit value QAFMmin, which is permitted considering both the intake air amount and the exhaust gas recirculation amount, is calculated according to the engine operating state, instead of obtaining the final smoke limit fuel injection amount QAFMfin by performing the increase correction of the smoke limit fuel injection amount QAFM as in the first embodiment. More specifically, the basic EGR smoke limit value QAFMminbs is calculated based on the engine speed NE that is one factor indicating the engine operating state. Then, the basic EGR smoke limit value QAFMminbs is corrected using the EGR rate correction coefficient Kminegr that is obtained based on the EGR rate.

Then, the final smoke limit fuel injection amount QAFMfin is set to the larger value of the EGR smoke limit value QAFMmin and the smoke limit fuel injection amount QAFM. Thus, the fuel injection amount is limited.

Thus, the fuel injection amount can be limited using the final smoke limit fuel injection amount QAFMfin that is determined considering the oxygen amount in the EGR gas during the EGR control. Therefore, the acceleration performance can be improved without decreasing the EGR gas amount while suppressing generation of smoke. When acceleration is performed after idling or deceleration, a remarkable effect can be obtained since the intake air amount is small.

(II) The oxygen amount in the EGR gas taken in the combustion chamber 4 is influenced by the atmospheric pressure Patm, and the intake air temperature THA and the coolant temperature THW as the temperature factors. Accordingly, the correction coefficients Kpa, Ktha, Kthw are obtained based on the data concerning the EGR rate, the atmospheric pressure Patm, the intake air temperature THA and the coolant temperature THW. Then, the EGR smoke limit value QAFMmin is calculated by performing the further correction using the correction coefficients. Thus, the fuel injection amount can be limited during the EGR control more appropriately. As a result, the acceleration performance can be improved and smoke can be suppressed without decreasing the EGR gas amount.

(III) Particularly when the process shown in FIG. 19 is applied to the second embodiment, the EGR smoke limit value QAFMmin is by far larger than the smoke limit fuel injection amount QAFM, and the final smoke limit fuel injection amount QAFMfin is greatly increased at the time of low temperature combustion. Therefore, in a diesel engine in which the low temperature combustion mode is performed, it is possible to obtain a remarkable effect of improving acceleration performance without decreasing the EGR gas amount while suppressing generation of smoke.

[Fourth embodiment]

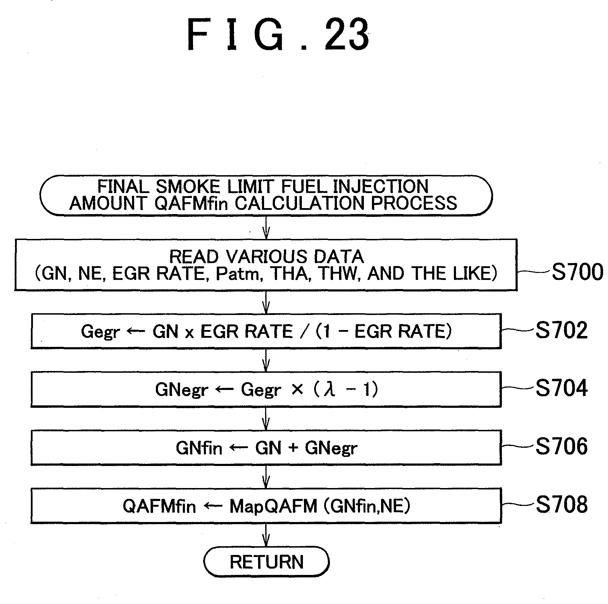

A diesel engine control system according to a fourth embodiment is different from the diesel engine control system according to the first embodiment in the method of calculating the final smoke limit fuel injection amount QAFMfin. That is, a process shown in FIG. 23 is performed instead of the final smoke limit fuel injection amount QAFMfin calculation process (in FIG. 3) in the first embodiment. Except for this calculation method, the diesel engine control system according to the fourth embodiment is the same as the diesel engine control system according to the first embodiment.

The final smoke limit fuel injection amount QAFMfin calculation process (in FIG. 23) will be described. After the process is started, first, detection results from the various sensors and various data which are calculated based on the detection results (an intake air amount GN, the engine speed NE, the EGR rate, the atmospheric pressure Patm, the intake air temperature THA, the coolant temperature THW, and the like) are read in a working area of the RAM (S700). Next, an EGR gas amount Gegr (g) is calculated using the following equation (5) based on the intake air amount GN per one revolution of the engine and the EGR rate which is calculated in the same manner as in the first embodiment (S702).

$$Gegr \leftarrow GN \times EGR \ rate \ / \ (1 - EGR \ rate) \ \dots \ (5)$$

Next, the EGR gas amount Gegr is converted to a value GNegr equivalent to the intake air amount GN using the equation (6) (S704).

$$GNegr \leftarrow Gegr \times (\lambda - 1) \ \dots \ (6)$$

The value of the air-fuel ratio $\lambda$ is 1 when the air-fuel ratio is equal to the stoichiometric air-fuel ratio. The air-fuel ratio $\lambda$ increases in proportion to an increase in the oxygen concentration. The air-fuel ratio $\lambda$ may be measured by a $\lambda$ sensor provided in the exhaust system. However, in the aforementioned configuration shown in FIG. 1, the air-fuel ratio $\lambda$ is calculated using the following equation (7).

$$\lambda \leftarrow GA / (Gf \times 14.7) \ldots (7)$$

In this equation, Gf signifies a fuel amount (g) per unit time during which fuel is injected into the combustion chamber, which is obtained from a fuel injection amount command value. GA signifies an intake air amount (g) per unit time.

Next, a final intake air amount GNfin is calculated using the following equation (8) (S706).

$$GNfin \leftarrow GN + GNegr \ldots (8)$$

Then, the final smoke limit fuel injection amount QAFMfin is calculated based on the final intake air amount GNfin and the engine speed NE according to the smoke limit fuel injection amount map MapQAFM (S708). The smoke limit fuel injection amount map MapQAFM used in the fourth embodiment is the same as the map shown in FIG. 4 in the first embodiment. In FIG. 4, the smoke limit fuel injection amount QAFM is obtained. However, in the fourth embodiment of the invention, the value of the smoke limit fuel injection amount QAFM in FIG. 4 is obtained as the final smoke limit fuel injection amount QAFMfin.

The final smoke limit fuel injection amount QAFMfin thus calculated is used in the determination in step S104 and the upper limit value setting process in step S108 in the fuel injection amount control process (FIG. 2). Thus, the upper limit of the fuel injection amount at which smoke is not generated becomes larger in the EGR performance region, and a larger amount of fuel can be injected.

In the fourth embodiment, it can be considered that the process in steps S700 to S706 in the final smoke limit fuel injection amount QAFMfin calculation process (FIG. 23) is equivalent to the process by the correction means.

According to the fourth embodiment that has been described, the following effect can be obtained.

(I) In the final smoke limit fuel injection amount QAFMfin calculation process (FIG. 23), the EGR gas is converted to the intake air amount considering the oxygen amount in the EGR gas in steps S700 to S704. The value GNegr obtained by conversion is added to the actual intake air amount GN (S706). Therefore, the final smoke limit fuel injection amount QAFMfin obtained in step S708 can be set to a value larger than the value of the smoke limit fuel injection amount that is set based on only the intake air amount GN. Thus, when there is a request for acceleration, a larger amount of fuel can be injected than when the smoke limit fuel injection amount that is set based on only the intake air amount GN is used.

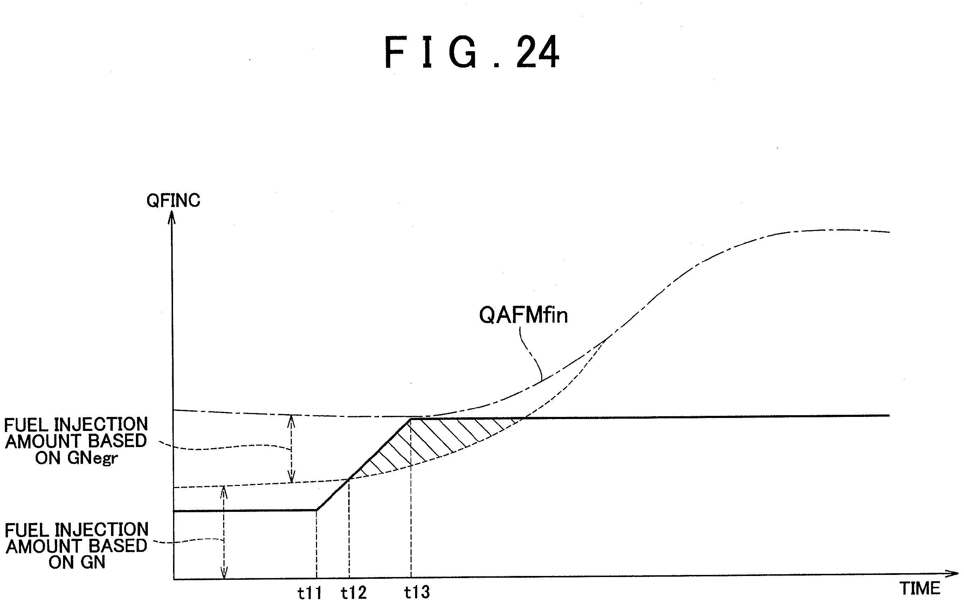

Hereinafter, description will be made of a case where an acceleration operation is performed at time t11 as shown by a solid line in a timing chart in FIG. 24, as an example. In the case where the fuel injection amount is limited by the final smoke limit fuel injection amount QAFMfin (shown by a dashed line) that is set considering the amount of the oxygen in the EGR gas, the final fuel injection amount QFINC can be increased to sufficiently correspond to the acceleration operation until time t13, as compared with the case where the fuel injection amount is limited at time t12 by the smoke limit fuel injection amount (shown by a dotted line) that is set based on only the intake air amount GN. Therefore, the fuel injection amount can be increased without generating smoke, and higher acceleration performance can be obtained, as compared with the case where the fuel injection amount shown by hatching is limited by the smoke limit fuel injection amount QAFM (shown by the dotted line). Particularly when acceleration is performed after idling or deceleration, a remarkable effect can be obtained since the intake air amount is small.

Thus, the acceleration performance can be improved without decreasing the EGR gas amount while suppressing generation of smoke.

[Fifth embodiment]

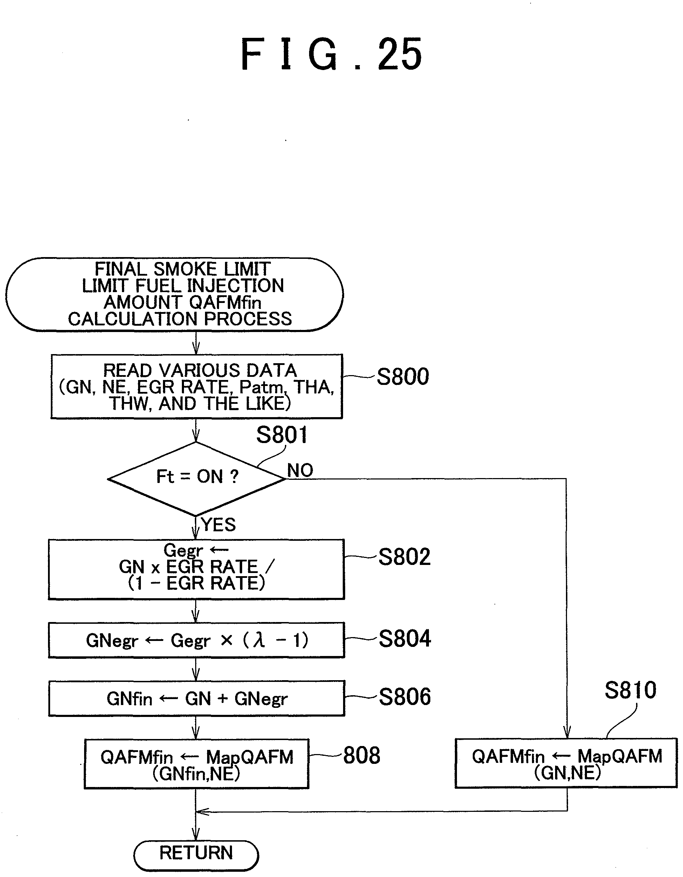

A diesel engine control system according to a fifth embodiment is different from the diesel engine control system according to the second embodiment in the method of calculating the final smoke limit fuel injection amount QAFMfin. That is, the final smoke limit fuel injection amount QAFMfin calculation process shown in FIG. 25 is performed instead of the final smoke limit fuel injection amount QAFMfin calculation process (FIG. 16) in the second embodiment. Except for this calculation method, the diesel engine control system according to the fifth embodiment is the same as the diesel engine control system according to the second embodiment.

The final smoke limit fuel injection amount QAFMfin calculation process (FIG. 25) will be described. In this process, steps S800 and S802 to S808 are the same as steps S700 to S708 in the final smoke limit fuel injection amount QAFMfin calculation process (FIG. 23) in the fourth embodiment.

The process shown in FIG. 25 is different from the process shown in FIG. 23 in that the determination as to whether the low temperature combustion mode performance flag Ft is ON is made (S801) subsequently to step S800, and in that a process of setting the final smoke limit fuel injection amount QAFMfin is performed according to the same map as the map shown in FIG. 4 (S810) if the flag Ft is OFF.

Thus, the final intake air amount GNfin is calculated by adding the converted value GNegr based on oxygen in the EGR gas to the intake air amount GN gas at the time of low temperature combustion when the EGR rate is particularly high (S802 to S806). As a result, the final smoke limit fuel injection amount QAFMfin is increased (S808).

In the aforementioned fifth embodiment, it can be considered that the process in steps S800, and S802 to S806 in the final smoke limit fuel injection amount QAFMfin calculation process (FIG. 25) is equivalent to the process by the correction means.

According to the fifth embodiment that has been described, the following effect can be obtained.

(I) The effect described in (I) in the fourth embodiment can be obtained. In addition, since the final intake air amount GNfin is calculated in the low temperature combustion mode, the value of the final smoke limit fuel injection amount QAFMfin is increased, and a remarkable effect can be obtained.

[Modifications]

(a) In the second embodiment, the increase correction of the smoke limit fuel injection amount QAFM may be performed considering the oxygen amount in the EGR gas also in the normal combustion mode. Also, in the fifth embodiment, the final intake air amount GNfin may be obtained considering the oxygen amount in the EGR gas also in the normal combustion mode.

(b) In each of the first to third embodiments, the correction coefficients Kpa, Ktha, Kthw corresponding to the atmospheric pressure Patm, the intake air temperature THA, and the coolant temperature THW are obtained. Instead, the correction based on the atmospheric pressure Patm, the intake air temperature THA, and the coolant temperature THW may be omitted by using a map that is obtained under the condition that the atmospheric pressure Patm, the intake air temperature THA, and the coolant temperature THW are at the level that is the most severe for generation of smoke. Examples of the map which is made under this condition include the smoke limit fuel injection amount map MapQAFM, the EGR smoke limit basic correction value map MapQAFMegrbs, the basic EGR smoke limit value map MapQAFMminbs, and the EGR rate correction coefficient map MapminEGR.

With regard to the temperature factor, the correction may be made using one of the intake air temperature THA and the coolant temperature THW, instead of using both of them.

(c) In each of the embodiments, the EGR valve opening amount (the target EGR valve opening amount or the detected EGR valve opening amount) may be used instead of the EGR rate.

(d) The oxygen amount in the intake air and the oxygen amount in the EGR gas may be calculated, and the smoke limit fuel injection amount may be calculated based on the sum of the oxygen amount in the intake air and the oxygen amount in the EGR gas.

(e) Also, the intake air amount may be corrected by multiplying the intake air amount by a coefficient based on the exhaust gas recirculation amount, and the smoke limit fuel injection amount may be calculated based on the corrected intake air amount.

In order to increase a smoke limit fuel injection amount (QAFM), an EGR smoke limit correction value (QAFMegr) is calculated considering an oxygen amount in EGR gas (S200 to S214), and a final smoke limit fuel injection amount (QAFMfin) is set by increasing the smoke limit fuel injection amount (QAFM) by the EGR smoke limit correction value (QAFMegr) (S216). Thus, when there is a request for acceleration, a larger amount of fuel can be injected than when the smoke limit fuel injection amount (QAFM) is used. As a result, acceleration performance can be improved without decreasing an amount of the EGR gas while suppressing generation of smoke.

**Claims**

1. A fuel injection amount control apparatus for an internal combustion engine (2), which performs exhaust gas recirculation, and is arranged for limiting a fuel injection amount (Q) required for the internal combustion engine (2) based on a smoke limit fuel injection amount (QAFM) that is set according to an intake air amount for suppressing generation of smoke, comprising:

limiting means for calculating an EGR smoke limit fuel injection amount (QAFMmin) which is permitted considering both an intake air amount and an exhaust gas recirculation amount including residual oxygen, based on an operating state of the internal combustion engine (2),

**characterized in that** the limiting means

calculates an EGR base smoke limit fuel injection amount (QAFMminbs) according to a rotational speed (NE) of the internal combustion engine (2), and obtains the EGR smoke limit fuel injection amount (QAFMmin) based on the EGR base smoke limit fuel injection amount (QAFMminbs), an exhaust gas recirculation rate, an atmospheric pressure, and a temperature factor, and

limits the fuel injection amount (Q) required for the internal combustion engine (2) based on the larger value of the EGR smoke limit fuel injection amount (QAFMmin) and the smoke limit fuel injection amount (QAFM).

2. The fuel injection amount control apparatus according to claim 1, wherein the temperature factor is at least one of the intake air temperature (TH1) and the coolant temperature (THW) of the internal combustion engine (2).

3. The fuel injection amount control apparatus according to claim 1 or 2, further comprising:
first feedback means for setting a target intake air amount based on the operating state of the internal combustion engine (2), and adjusting the exhaust gas recirculation amount such that an actual intake air amount matches the target intake air amount.

4. The fuel injection amount control apparatus according to claim 1 or 2, further comprising:
second feedback means for setting a target air-fuel ratio based on the operating state of the internal combustion engine (2), and adjusting the exhaust gas recirculation amount such that an actual exhaust gas air-fuel ratio matches the target air-fuel ratio.

5. The fuel injection amount control apparatus according to any one of claims 1, 2 and 4, wherein the exhaust gas recirculation is performed in a low temperature combustion mode in which generation of smoke is suppressed by making the exhaust gas recirculation amount extremely large.

6. The fuel injection amount control apparatus according to any one of claims 1 to 5, wherein the exhaust gas recirculation internal combustion engine is an exhaust gas recirculation diesel engine (2).

**Patentansprüche**

1. Kraftstoffeinspritzmengensteuerungsvorrichtung für eine Brennkraftmaschine (2), die eine Abgasrückführung durchführt, und zum Beschränken einer für die Brennkraftmaschine (2) erforderlichen Kraftstoffeinspritzmenge (Q) angeordnet ist, auf der Grundlage einer Rauchbeschränkungskraftstoffeinspritzmenge (QAFM), die gemäß einer Einlassluftmenge festgelegt wird, um eine Rauchentwicklung zu unterdrücken, mit:

einer Beschränkungseinrichtung zum Berechnen einer EGR-Rauchbeschränkungskraftstoffeinspritzmenge (QAFMmin), wodurch sowohl eine Einlassluftmenge als auch eine Abgasrückführungsmenge einschließlich eines Restsauerstoffs berücksichtigt werden kann, auf der Grundlage eines Betriebszustands der Brennkraftmaschine (2),

**dadurch gekennzeichnet, dass** die Beschränkungseinrichtung

eine EGR-Basisrauchbeschränkungskraftstoffeinspritzmenge (QAFMminbs) gemäß einer Drehzahl (NE) der Brennkraftmaschine (2) berechnet und die EGR-Rauchbeschränkungskraftstoffeinspritzmenge (QAFMmin) auf der Grundlage der EGR-Basisrauchbeschränkungskraftstoffeinspritzmenge (QAFMminbs), einer Abgasrückführungsrate, eines Umgebungsdrucks und eines Temperaturfaktors erlangt, und

die für die Brennkraftmaschine (2) erforderliche Kraftstoffeinspritzmenge (Q) auf der Grundlage des größeren Werts von der EGR-Rauchbeschränkungskraftstoffeinspritzmenge (QAFMmin) und der Rauchbeschränkungskraftstoffeinspritzmenge (QAFM) beschränkt.

2. Kraftstoffeinspritzmengensteuerungsvorrichtung gemäß Anspruch 1, wobei der Temperaturfaktor mindestens einer von der Einlasslufttemperatur (TH1) und der Kühlmitteltemperatur (THW) der Brennkraftmaschine (2) ist.

3. Kraftstoffeinspritzmengensteuerungsvorrichtung gemäß Anspruch 1 oder 2, des Weiteren mit:
einer ersten Regeleinrichtung zum Festlegen einer Soll-Einlassluftmenge auf der Grundlage des Betriebszustands der Brennkraftmaschine (2) und Einstellen der Abgasrückführungsmenge, sodass eine tatsächliche Einlassluftmenge mit der Soll-Einlassluftmenge übereinstimmt.

4. Kraftstoffeinspritzmengensteuerungsvorrichtung gemäß Anspruch 1 oder 2, des Weiteren mit:
einer zweiten Regeleinrichtung zum Festlegen eines Soll-Luft-Kraftstoff-Verhältnisses auf der Grundlage des Betriebszustands der Brennkraftmaschine (2) und Einstellen der Abgasrückführungsmenge, sodass ein tatsächliches Abgas-Luft-Kraftstoff-Verhältnis mit dem Soll-Luft-Kraftstoff-Verhältnis übereinstimmt.

5. Kraftstoffeinspritzmengensteuerungsvorrichtung gemäß einem der Ansprüche 1, 2 und 4, wobei die Abgasrückführung in einem Niedertemperaturverbrennungsmodus durchgeführt wird, bei dem eine Rauchentwicklung dadurch unterdrückt wird, dass die Abgasrückführungsmenge äußerst großgemacht wird.

6. Kraftstoffeinspritzmengensteuerungsvorrichtung gemäß einem der Ansprüche 1 bis 5, wobei die Abgasrückführungsbrennkraftmaschine ein Abgasrückführungsdieselmotor (2) ist.


**Revendications**

1. Dispositif pour contrôler la quantité d'injection de carburant dans un moteur à combustion interne (2), qui effectue une recirculation des gaz d'échappement, et qui est agencé de manière à limiter la quantité d'injection de carburant (Q) nécessaire pour le moteur à combustion interne (2) sur la base de la quantité d'injection de carburant limitant les fumées (QAFM) qui est établie en fonction de la quantité d'air d'admission pour supprimer la génération de fumées, comprenant :

   un moyen de limitation pour calculer la quantité d'injection de carburant limitant les fumées de RGE (QAFMmin) qui est permise étant considérées tant la quantité d'air d'administration que la quantité de recirculation de gaz d'échappement y compris l'oxygène résiduel, sur la base d'un état de fonctionnement du moteur en combustion interne (2),
   **caractérisé en ce que** le moyen de limitation
   calcule une quantité d'injection de carburant limitant les fumées de base de RGE (QAFMminbs) en fonction de la vitesse de rotation (NE) du moteur à combustion interne (2), et obtient la quantité d'injection de carburant limitant les fumées de RGE (QAFMmin) sur la base de la quantité d'injection de carburant limitant les fumées de base de RGE (QAFMminbs), du taux de recirculation des gaz d'échappement, de la pression atmosphérique, et d'un facteur de température, et
   limite la quantité d'injection de carburant (Q) nécessaire pour le moteur à combustion interne (2) sur la base de la valeur plus élevée entre la quantité d'injection de carburant limitant les fumées de RGE (QAFMmin) et la quantité d'injection de carburant limitant les fumées (QAFM).

2. Dispositif pour contrôler la quantité d'injection de carburant selon la revendication 1, dans lequel le facteur de température est au moins l'un parmi la température d'air d'admission (TH1) et la température de caloporteur (THW) du moteur à combustion interne (2).

3. Dispositif pour contrôler la quantité d'injection de carburant selon la revendication 1 ou 2, comprenant en outre un premier moyen de rétroaction pour établir une quantité d'air d'admission cible sur la base de l'état de fonctionnement du moteur à combustion interne (2), et ajuster la quantité de recirculation de gaz d'échappement de façon que la quantité d'air d'admission réelle corresponde à la quantité d'air d'admission cible.

4. Dispositif pour contrôler la quantité d'injection de carburant selon la revendication 1 ou 2, comprenant en outre un deuxième moyen de rétroaction pour établir un rapport air/carburant cible sur l'état de fonctionnement du moteur à combustion interne (2), et ajuster la quantité de recirculation de gaz d'échappement de façon que le rapport air/carburant de gaz d'échappement réel corresponde au rapport air/carburant cible.

5. Dispositif pour contrôler la quantité d'injection de carburant selon l'une quelconque des revendications 1, 2 et 4, dans lequel la recirculation des gaz d'échappement est effectuée dans un mode de combustion à basse température dans lequel la génération de fumée est supprimée par le fait que la quantité de recirculation des gaz d'échappement est rendue extrêmement importante.

6. Dispositif pour contrôler la quantité d'injection de carburant selon l'une quelconque des revendications 1 à 5, dans lequel le moteur à combustion interne avec recirculation des gaz d'échappement est un moteur diésel à recirculation des gaz d'échappement (2).

# FIG.1

# F I G . 2

```
      ┌─────────────────────────┐
     (  FUEL INJECTION AMOUNT    )
     (    CONTROL PROCESS        )
      └─────────────────────────┘
                  │
                  ▼
        ┌──────────────────┐
        │   READ ENGINE    │──── S100
        │ OPERATING STATE  │
        └──────────────────┘
                  │
                  ▼
        ┌──────────────────────┐
        │ CALCULATE BASIC REQUIRED │──── S102
        │   INJECTION AMOUNT Q │
        └──────────────────────┘
                  │      S104
                  ▼
              ◇─────────◇   NO
             ╱  Q > QAFMfin  ╲────────────────┐
             ╲      ?       ╱                 │
              ◇─────────◇                     │
                  │ YES   S108        S106     │
                  ▼                     ▼
        ┌──────────────────┐   ┌──────────────────┐
        │ QFINC ← QAFMfin  │   │   QFINC ← Q      │
        └──────────────────┘   └──────────────────┘
                  │◄────────────────────┘
                  ▼
        ┌──────────────────┐
        │ INJECTION PERIOD Tq │──── S110
        │  ← fp(QFINC,Pf)  │
        └──────────────────┘
                  │
                  ▼
            (  RETURN  )
```

# FIG.3

FINAL SMOKE LIMIT FUEL INJECTION
AMOUNT QAFMfin CALCULATION PROCESS

READ VARIOUS DATA
(GN, NE, EGR RATE, Patm, THA,
THW, AND THE LIKE) —S200

QAFM ← MapQAFM (GN,NE) —S202

QAFMegrbs ← MapQAFMegrbs (NE) —S204

Kegr ← MapEGR (EGR RATE) —S206

Kpa ← MapPa (Patm) —S208

Ktha ← MapTHA (THA) —S210

Kthw ← MapTHW (THW) —S212

QAFMegr ←
QAFMegrbs × Kegr × Kpa × Ktha × Kthw —S214

QAFMfin ← QAFM+QAFMegr —S216

RETURN

19

# F I G . 4

[MapQAFM]

# F I G . 5

[MapQAFMegrbs]

# F I G . 6

[MapEGR]

# F I G . 7

[MapPa]

# F I G . 8

[MapTHA]

INTAKE AIR
TEMPERATUER
(°C)

# F I G . 9

[MapTHW]

COOLANT
TEMPERATURE
(°C)

# F I G . 10

QAFMfin

(EGR
PERFORMANCE
REGION)

(EGR
STOP
REGION)

QAFM

GN

# FIG.11

EP 2 292 912 B1

# FIG.12

```
        ┌─────────────────────┐
        │  COMBUSTION MODE    │
        │  SETTING PROCESS    │
        └─────────────────────┘
                 │
                 ▼
        ┌─────────────────────┐
        │  CALCULATE X, Y     │──── S300
        └─────────────────────┘
                 │
                 ▼        S302
            ╱─────────╲         NO
           ╱  Ft = ON ? ╲─────────────────────────────────────┐
            ╲─────────╱                                        │
                 │ YES    S304                                 │
                 ▼                                         S316 │
            ╱─────────╲     NO      S310          ╱─────────╲  ▼    NO    S318
           ╱ ACCP ≦ X ? ╲────────┬─────────┐     ╱ ACCP ≧ Y ? ╲──────┬─────────┐
            ╲─────────╱          │ Ft ← OFF │     ╲─────────╱         │ Ft ← ON │
                 │ YES           └─────────┘          │ YES          └─────────┘
                 │                    │               │                   │
    ①───────────┼────────────────────┘               │                   ▼
                 │                                     │                   ①
                 ▼        S306                         ▼       S312
        ┌─────────────────────┐             ┌─────────────────────┐
        │ SET TARGET THROTTLE │             │ SET TARGET THROTTLE │
        │ OPENING AMOUNT      │             │ OPENING AMOUNT      │
        │ TAt ACCORDING       │             │ TAt ACCORDING       │
        │ TO THROTTLE OPENING │             │ TO THROTTLE OPENING │
        │ AMOUNT MAP FOR      │             │ AMOUNT MAP FOR      │
        │ LOW TEMPERATURE     │             │ NORMAL COMBUSTION   │
        │ COMBUSTION MODE     │             │ MODE                │
        └─────────────────────┘             └─────────────────────┘
                 │        S308                        │       S314
                 ▼                                     ▼
        ┌─────────────────────┐             ┌─────────────────────┐
        │ SET TARGET EGR VALVE│             │ SET TARGET EGR VALVE│
        │ OPENING AMOUNT EGRt │             │ OPENING AMOUNT EGRt │
        │ ACCORDING TO EGR    │             │ ACCORDING TO EGR    │
        │ VALVE OPENING AMOUNT│             │ VALVE OPENING AMOUNT│
        │ MAP FOR LOW         │             │ MAP FOR NORMAL      │
        │ TEMPERATURE         │             │ COMBUSTION MODE     │
        │ COMBUSTION MODE     │             │                     │
        └─────────────────────┘             └─────────────────────┘
                 │                                     │
                 ▼◄────────────────────────────────────┘
          ┌──────────┐
          │  RETURN  │
          └──────────┘
```

25

# F I G . 13

ACCP

(NORMAL COMBUSTION MODE)

X

Y

(LOW TEMPERATURE
COMBUSTION MODE)

NE

# F I G . 14

ACCP

[AIR-FUEL RATIO CONTROL MAP
FOR LOW TEMPERATURE
COMBUSTION MODE]

AF = 15.5

AF = 17

AF = 16

AF = 18

NE

# F I G . 15

[AIR-FUEL RATIO CONTROL
MAP FOR NORMAL
COMBUSTION MODE]

ACCP

AF = 24

AF = 35

AF = 45

AF = 50

NE

# FIG.16

```
┌─────────────────────────────────────────┐
│   FINAL SMOKE LIMIT FUEL INJECTION       │
│ AMOUNT QAFMfin CALCULATION PROCESS       │
└─────────────────────────────────────────┘
                    │
                    ▼
┌─────────────────────────────────┐
│       READ VARIOUS DATA          │── S500
│ (GN, NE, EGR RATE, Patm, THA,    │
│    THW, AND THE LIKE)            │
└─────────────────────────────────┘
                    │
                    ▼
┌─────────────────────────────────┐
│   QAFM ← MapQAFM (GN,NE)         │── S502
└─────────────────────────────────┘
                    │
                 S503
                    ▼
            ◇─────────────◇    NO
            ◇  Ft = ON ?  ◇─────────────────┐
            ◇─────────────◇                  │
                    │ YES                     │
                    ▼                         │
┌─────────────────────────────────┐          │
│ QAFMegrbs ← MapQAFMegrbs (NE)    │── S504   │
└─────────────────────────────────┘          │
                    │                         │
                    ▼                         │
┌─────────────────────────────────┐          │         S518
│   Kegr ← MapEGR (EGR RATE)       │── S506   │
└─────────────────────────────────┘          │
                    │                         ▼
                    ▼              ┌────────────────────┐
┌─────────────────────────────────┐          │ QAFMfin ← QAFM     │
│     Kpa ← MapPa (Patm)           │── S508   └────────────────────┘
└─────────────────────────────────┘          
                    │                         
                    ▼                         
┌─────────────────────────────────┐          
│     Ktha ← MapTHA (THA)          │── S510   
└─────────────────────────────────┘          
                    │                         
                    ▼                         
┌─────────────────────────────────┐          
│     Kthw ← MapTHW (THW)          │── S512   
└─────────────────────────────────┘          
                    │                         
                    ▼                         
┌─────────────────────────────────┐          
│         QAFMegr ←                │── S514   
│ QAFMegrbs × Kegr × Kpa × Ktha × Kthw │      
└─────────────────────────────────┘          
                    │                         
                    ▼                         
┌─────────────────────────────────┐          
│  QAFMfin ← QAFM+QAFMegr          │── S516   
└─────────────────────────────────┘          
                    │                         
                    ▼◄────────────────────────┘
            ┌─────────────┐
            │   RETURN     │
            └─────────────┘
```

# FIG. 17

```
        ( FUEL INJECTION AMOUNT )
        (    CONTROL PROCESS     )
                    │
                    ▼
        ┌───────────────────────┐   S400
        │     READ ENGINE       │
        │   OPERATING STATE     │
        └───────────────────────┘
                    │
                    ▼     S401
                 ╱──────╲          NO
                ╱ Ft = ON? ╲────────────────────────────┐
                ╲          ╱                             │
                 ╲────────╱                              │
                    │ YES    S403                        │   S402
                    ▼                                     ▼
        ┌───────────────────────┐        ┌───────────────────────┐
        │ CALCULATE BASIC       │        │ CALCULATE BASIC       │
        │ REQUIRED INJECTION    │        │ REQUIRED INJECTION    │
        │ AMOUNT Q FOR LOW      │        │ AMOUNT Q FOR          │
        │ TEMPERATURE           │        │ NORMAL COMBUSTION     │
        │ COMBUSTION MODE       │        │ MODE                  │
        └───────────────────────┘        └───────────────────────┘
                    │                             │
                    │◄────────────────────────────┘
                    ▼     S404
                 ╱──────╲          NO
                ╱  Q >    ╲────────────────────────────┐
                ╲ QAFMfin ╱                            │
                 ╲   ?   ╱                             │
                    │ YES                              │  S406
                    ▼                                   ▼
        ┌─────────────────────┐         ┌─────────────────────┐
        │ QFINC ← QAFMfin     │ S408    │    QFINC ← Q        │
        └─────────────────────┘         └─────────────────────┘
                    │                             │
                    │◄────────────────────────────┘
                    ▼
        ┌─────────────────────┐  S410
        │ INJECTION PERIOD Tq │
        │   ← fp (QFINC,Pf)   │
        └─────────────────────┘
                    │
                    ▼
               ( RETURN )
```

# F I G . 18

QAFMfin

(LOW
TEMPERATURE
COMBUSTION
REGION)

(NORMAL
COMBUSTION
REGION)

QAFM

GN

# F I G . 19

| | |
|---|---|
| QAFMminbs ← MapQAFMminbs (NE) | ～S604 |
| Kminegr ← MapminEGR (EGR RATE) | ～S606 |
| Kpa ← MapPa (Patm) | ～S608 |
| Ktha ← MapTHA (THA) | ～S610 |
| Kthw ← MapTHW (THW) | ～S612 |
| QAFMmin ←<br>QAFMminbs × Kminegr × Kpa × Ktha × Kthw | ～S614 |
| QAFMf i n ←<br>MAX [QAFM, QAFMmin] | ～S616 |

# F I G . 20

QAFMminbs (mm³)

[MapQAFMminbs]

NE(rpm)

# F I G . 21

Kminegr

[MapminEGR]

1.2

1.1

1.0

0.0

0    20    40    60    80    100

EGR RATE (%)

# F I G . 22

# F I G . 23

```
┌─────────────────────────────────────────────────┐
│      FINAL SMOKE LIMIT FUEL INJECTION             │
│   AMOUNT QAFMfin CALCULATION PROCESS              │
└─────────────────────────────────────────────────┘
                        ↓
┌─────────────────────────────────────────────────┐
│              READ VARIOUS DATA                    │──── S700
│  (GN, NE, EGR RATE, Patm, THA, THW, AND THE LIKE) │
└─────────────────────────────────────────────────┘
                        ↓
┌─────────────────────────────────────────────────┐
│    Gegr ← GN x EGR RATE / (1 − EGR RATE)          │──── S702
└─────────────────────────────────────────────────┘
                        ↓
┌─────────────────────────────────────────────────┐
│          GNegr ← Gegr × ( λ − 1)                  │──── S704
└─────────────────────────────────────────────────┘
                        ↓
┌─────────────────────────────────────────────────┐
│            GNfin ← GN + GNegr                     │──── S706
└─────────────────────────────────────────────────┘
                        ↓
┌─────────────────────────────────────────────────┐
│       QAFMfin ← MapQAFM (GNfin,NE)                │──── S708
└─────────────────────────────────────────────────┘
                        ↓
                  (  RETURN  )
```

# FIG.24

EP 2 292 912 B1

# F I G . 25

```
      ┌─────────────────────────┐
      │    FINAL SMOKE LIMIT     │
      │  LIMIT FUEL INJECTION    │
      │    AMOUNT QAFMfin        │
      │  CALCULATION PROCESS     │
      └─────────────────────────┘
                  │
      ┌─────────────────────────┐
      │    READ VARIOUS DATA     │  ~S800
      │ (GN, NE, EGR RATE, Patm, THA,
      │    THW, AND THE LIKE)    │
      └─────────────────────────┘
                  │      S801
                 ╱╲
                ╱  ╲        NO
               ╱ Ft = ON? ╲──────────────────┐
               ╲          ╱                   │
                ╲        ╱                    │
                 ╲      ╱                     │
                  │ YES                       │
      ┌─────────────────────────┐             │
      │        Gegr ←           │  ~S802       │
      │    GN x EGR RATE /       │             │
      │    (1 − EGR RATE)        │             │
      └─────────────────────────┘             │
                  │                            │
      ┌─────────────────────────┐             │
      │ GNegr ← Gegr × (λ − 1)   │  ~S804       │
      └─────────────────────────┘             │
                  │                            │
      ┌─────────────────────────┐             │
      │   GNfin ← GN + GNegr     │  ~S806       │
      └─────────────────────────┘             │
                  │                  S810      │
      ┌─────────────────────────┐   ┌─────────────────────────┐
      │ QAFMfin ← MapQAFM  ~808  │   │  QAFMfin ← MapQAFM      │
      │   (GNfin,NE)            │   │     (GN,NE)             │
      └─────────────────────────┘   └─────────────────────────┘
                  │◄──────────────────────────┘
            ┌───────────┐
            │  RETURN   │
            └───────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2599953 B
- JP 2000008835 A

- EP 1164274 A2